# EUROPEAN PATENT APPLICATION

(11) **EP 4 202 873 A1**
(43) Date of publication of application: **28.06.2023**
(21) Application number: 20951341.5
(22) Date of filing: 24.08.2020
(51) Int. Cl.: G07C 9/25

(54) **INFORMATION PROCESSING DEVICE, SYSTEM, INFORMATION PROCESSING METHOD, AND RECORDING MEDIUM**

(71) Applicant: NEC Corporation, 108-8001 Tokyo (JP)
(72) Inventor: IRIE, Fumi, Tokyo 108-8001 (JP); YOSHIMURA, Yoshitaka, Tokyo 108-8001 (JP); SHINGAI, Misuzu, Tokyo 108-8001 (JP); KOKUBO, Honami, Tokyo 108-8001 (JP); TAMURA, Takeo, Tokyo 108-8001 (JP); NORIMATSU, Koui, Tokyo 108-8001 (JP); IZUMO, Kenichi, Tokyo 108-8001 (JP)
(74) Representative: Betten & Resch
(86) International application number: PCT/JP2020/031875
(87) International publication number: WO 2022/044085

(57) **Abstract**

An information processing device includes an information acquisition means, an abnormality detection means, and a control means. The information acquisition means acquires personal identification information of a subject. The abnormality detection means detects an abnormality concerning the subject by using sensors. The control means controls the acquiring of the personal identification information based on the abnormality.

## Description

### TECHNICAL FIELD

The present disclosure relates to an information processing device, a system, an information processing method, and a recording medium.

### BACKGROUND ART

In an inspection at a passport control, an immigration officer checks contents of a passport of each traveler, and compares a facial photograph attached to the passport with a face of the traveler to determine whether or not to allow an entrant to enter into a country. In order to improve efficiency of the inspection by the immigration officer, a device has been proposed that captures a facial image of the traveler and compares the captured facial image with the photograph of the passport of the traveler (see Patent Documents 1 and 2). In recent years, an information processing device that acquires passport information, the facial image, fingerprints, or the like mainly with respect to foreign entrants prior to the inspection by the immigration officer is known.

### PRECEDING TECHNICAL REFERENCES

### PATENT DOCUMENT

Patent Document 1: Japanese Laid-open Patent Publication No. 2002-008070
Patent Document 2: Japanese Laid-open Patent Publication No. 2016-053896

### SUMMARY

### PROBLEM TO BE SOLVED BY THE INVENTION

It is one object of the present disclosure to improve a technique disclosed in prior art documents described above.

### MEANS FOR SOLVING THE PROBLEM

According to an example aspect of the present disclosure, there is provided an information processing device including:
an information acquisition means configured to acquire personal identification information of a subject;
an abnormality detection means configured to detect an abnormality concerning the subject by using sensors; and
a control means configured to control the acquiring of the personal identification information based on the abnormality.

According to another example aspect of the present disclosure, there is provided a method including:
acquiring personal identification information of a subject;
detecting an abnormality concerning the subject by using sensors; and
controlling the acquiring of the personal identification information based on the abnormality.

According to still another example aspect of the present disclosure, there is provided a recording medium storing a program, the program causing a computer to perform a process including:
acquiring personal identification information of a subject;
detecting an abnormality concerning the subject by using sensors; and
controlling the acquiring of the personal identification information based on the abnormality.

### BRIEF DESCRIPTION OF THE DRAWINGS

FIG. 1 illustrates an overall configuration of a passport control system according to a first example embodiment.
FIG. 2 is a diagram illustrating an appearance of an information processing device.
FIG. 3 illustrates an internal configuration of a base of the information processing device.
FIG. 4 is a diagram illustrating a functional configuration of the information processing device.
FIG. 5A and FIG. 5B are diagrams illustrating functional configurations of a management server and a tablet.
FIG. 6 is a flowchart of an information acquisition process.
FIG. 7A and FIG. 7B are flowcharts of a passport process and a facial recognition process.
FIG. 8A and FIG. 8B are flowcharts of a fingerprint collection process and an ED card process.
FIG. 9A through FIG. 9D illustrate display examples of a touch panel.
FIG. 10A through FIG. 10C illustrate other display examples of the touch panel.
FIG. 11A through FIG. 11C illustrate other display examples of the touch panel.
FIG. 12A through FIG. 12C illustrate other display examples of the touch panel.
FIG. 13A through FIG. 13D illustrate other display examples of the touch panel.
FIG. 14A through FIG. 14D illustrate other display examples of the touch panel.
FIG. 15A through FIG. 15D illustrate other display examples of the touch panel.
FIG. 16A through FIG. 16D illustrate other display examples of the touch panel.
FIG. 17A through FIG. 17D illustrate other display examples of the touch panel.
FIG. 18A through FIG. 18C illustrate other display examples of the touch panel.
FIG. 19 is a flowchart of an information management process by the management server.
FIG. 20 illustrates a display example of the tablet.
FIG. 21 illustrates another display example.
FIG. 22 illustrates another display example.
FIG. 23 illustrates another display example.
FIG. 24 illustrates another display example.
FIG. 25 illustrates another display example.
FIG. 26 illustrates another display example.
FIG. 27 illustrates another display example.
FIG. 28 illustrates another display example.
FIG. 29 illustrates another display example.
FIG. 30 illustrates another display example.
FIG. 31 illustrates another display example.
FIG. 32 is a flowchart of an information acquisition process according to a second example embodiment.
FIG. 33 is a flowchart of a facial recognition process according to the second example embodiment.
FIG. 34 illustrates an example of a thermographic image in a state in which two persons illegally operate the information processing device.
FIG. 35 is a flowchart of a fingerprint collection process according to a third example embodiment.
FIG. 36 is a flowchart of a feverish person detection process according to a fourth example embodiment.
FIG. 37 is an example of an image to be sent to the tablet when a feverish person is detected.
FIG. 38 is a block diagram illustrating a configuration of an information processing device according to a fifth example embodiment.
FIG. 39 is a flowchart of an information processing according to the fifth example embodiment.

### EXAMPLE EMBODIMENTS

In the following, example embodiments of this disclosure will be described with reference to the accompanying drawings.

### <First Example Embodiment>

A passport control system of this example embodiment is installed at an airport or the like, and is mainly used for a passport control of foreign nationals. The passport control for the foreign nationals is basically carried out in two steps for acquiring personal identification information and carrying out the passport control by an immigration officer. In detail, upon disembarking from the airplane and entering a passport control area, each foreign entrant first operates an information processing device to provide personal identification information. Next, the foreign entrant approaches to a passport control booth where the immigration officer is present and undergoes an inspection by the immigration officer. Once the inspection by the immigration officer is completed, the entrant is permitted to enter the country.

### [Overall Configuration]

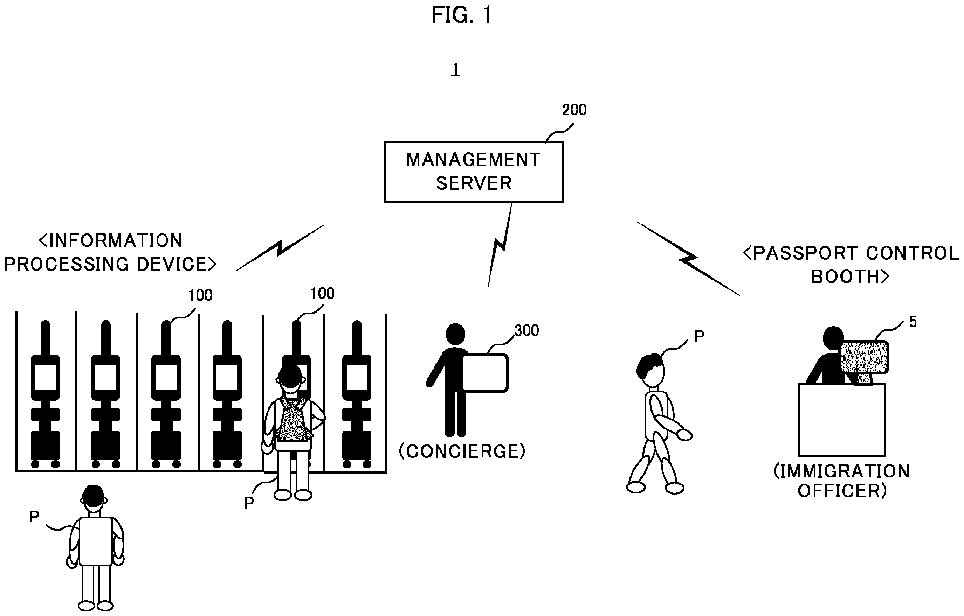

FIG. 1 illustrates an overall configuration of the passport control system according to the first example embodiment. The passport control system 1 includes a plurality of information processing devices 100, a management server 200, a tablet 300, and a PC 5. The information processing device 100 is provided to acquire the personal identification information of each entrant P. The entrant P may not be limited to the foreign national, and can be any persons who wishes to enter the country. Note that the entrant P may be not only a human but also an animal such as a dog, a cat, or a snake. These entrants P are examples of "subjects". The personal identification information includes a facial image and fingerprints. A concierge stands by near the information processing device 100, manages the information processing device 100, and assists operations of the information processing device 100. The concierge is assigned to a predetermined number of the information processing devices 100 to be in charge. The concierge has the tablet 300 to be used when carrying out a management and the like of the information processing device 100. Note that the tablet 300 is an example, and any terminal such as the PC or a smartphone may be used as long as the terminal is a terminal device capable of managing the information processing device 100. In some cases, an assistant (a supporter) who carries out an auxiliary work is assigned to the concierge, but is also referred to as the concierge including the assistant in this specification.

In a passport control booth, the immigration officer stands by and inspects each entrant P who has provided the personal identification information. The PC 5 used by the immigration officer is located in the passport control booth. The immigration officer displays the personal identification information of the entrant P on the PC 5, and conducts the inspection. In FIG. 1, only one passport control booth is illustrated for convenience, but in practice, a plurality of passport control booths are installed.

The management server 200 manages and controls the information processing device 100 and the tablet 300 through wireless communications. Also, the management server 200 communicates with the PC 5 used by the immigration officer via wired or wireless communications. Specifically, the information processing device 100 transmits information provided by the entrant P operating the information processing device 100 to the management server 200. The management server 200 stores information acquired from the information processing device 100, and transmits the acquired information to the tablet 300 and the PC 5. The tablet 300 receives information indicating an operation state of the information processing device 100 from the management server 200, and displays the information. Accordingly, the concierge can comprehend a state of the information processing device 100 of which the concierge is in charge.

In addition, the management server 200 transmits the personal identification information provided by the entrant P by operating the information processing device 100 to the PC 5 of the passport control booth. The immigration officer displays the personal identification information of the entrant P received from the management server 200 on the PC 5, and inspects the contents. In the above-described example embodiment, the information processing device 100, the tablet 300 of the concierge, and the PC 5 of the passport control booth exchange information through the management server 200; however, exchanging of information between the information processing device 100 and the tablet 300 and exchanging of information between the information processing device 100 and the passport control booth may be carried out directly without going through the management server 200.

### [Information Processing Device]

Next, the information processing device will be described.

### (Appearance Configuration)

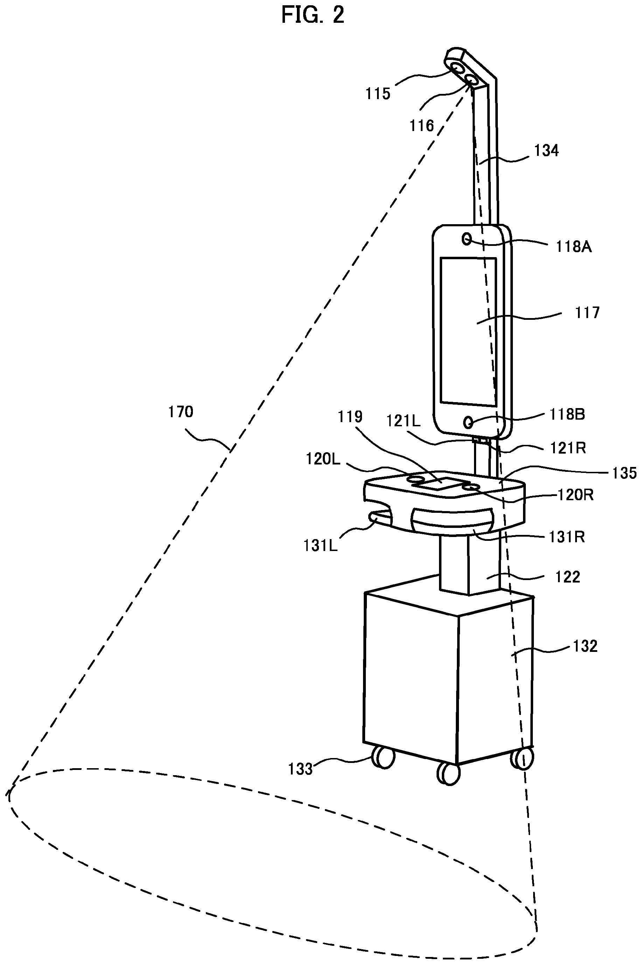

FIG. 2 is a diagram illustrating an appearance of the information processing device 100. The information processing device 100 includes a thermal sensor 115, a surveillance camera 116, a touch panel 117, two facial recognition cameras 118A and 118B, a passport reader 119, a pair of fingerprint scanners 120R and 120L, a pair of cameras 121R and 121L for hands, a height adjustment mechanism 122, a pair of moving handles 131R and 131L, a base 132, moving casters 133, a bar 134, and a table 135. In the following explanation, subscripts are omitted when there is no need to specify individual elements which are formed as a pair. For instance, in a case of specifying either one of the fingerprint scanners 120R and 120L, the specified one is referred to as the "fingerprint scanner 120R", the "fingerprint scanner 120L", or the like, and in a case where either one is not needed to be specified, it is simply referred to as the "fingerprint scanner 120".

The thermal sensor 115 is provided at an uppermost portion of the information processing device 100, and detects an approach of a person to the information processing device 100. Basically, in a state in which the thermal sensor 115 does not detect the person, the information processing device 100 is in a standby (sleep) state. When the entrant P stands in front of the thermal sensor 115, the thermal sensor 115 detects the entrant P as a heat source, and the information processing device 100 activates. Moreover, as will be described later, the thermal sensor 115 is also used to detect a fever of the entrant P.

The surveillance camera 116 is also provided at the uppermost portion of the information processing device 100, and captures a predetermined range in front of the information processing device 100 obliquely from above. The surveillance camera 116 is used to capture a behavior or the like of the entrant P in front of the information processing device 100.

The touch panel 117 is provided at a position corresponding to an upper body of the entrant P standing in front of the information processing device 100 and is movable in a vertical direction along the bar 134. The touch panel 117 has a role as an input section and a display section when the entrant P operates the information processing device 100. On the touch panel 117, guide information necessary for the entrant P to operate the information processing device 100 is displayed. In addition, when the entrant P needs to make some selections with respect to the guide information, a selection button is displayed on the touch panel 117.

The facial recognition camera 118A is provided on an upper face of the touch panel 117, and the facial recognition camera 118B is provided at a lower face of the touch panel 117. Basically, the upper facial recognition camera 118A is used to capture a facial image of a tall person, and the lower facial recognition camera 118B is used to capture a facial image of a short person such as a child. Accordingly, by selecting one facial recognition camera to be used in accordance with a subject to be captured, there is a high possibility that an image suitable for a facial recognition (for instance, a front facial image) can be captured. Note that the facial image of the short person may be captured by the facial recognition camera 118A on the upper face, or the facial image of the tall person may be captured by the facial recognition camera 118B on the lower face. And, by using a plurality of facial recognition cameras, it becomes possible to acquire not only the front facial image but also facial images at various angles.

In a case where the touch panel 117 is movable in the vertical direction along the bar 134 as in the present example embodiment, a single facial recognition camera may be provided near a center in the vertical direction of the touch panel 117. Moreover, in the example embodiment in FIG. 2, the facial recognition cameras 118A and 118B are provided outside an upper display area and a lower display area of the touch panel 117, but instead, a half mirror may be provided above the touch panel 117 and a facial recognition camera may be provided at any position inside the half mirror. By providing the facial recognition camera inside the half mirror in this manner, it becomes possible to capture a facial image without making the entrant being aware of a presence of the camera.

The table 135 is provided below the touch panel 117. The passport reader 119 and the pair of the fingerprint scanners 120R and 120L are provided on a top of the table 135. The passport reader 119 wirelessly reads recorded information from an IC chip in the passport which is placed on the passport reader 119. In detail, the passport reader 119 reads, from the passport, identification items such as a nationality, a name, a date of birth, a passport number, and other identification information, as well as a facial image of the photograph attached to a passport application form (hereinafter collectively referred to as "passport information"). The fingerprint scanners 120 read fingerprints of index fingers of a right hand and a left hand of the entrant P. The fingerprint scanner 120R is for the right hand and the fingerprint scanner 120L is for the left hand.

The height adjustment mechanism 122 moves the table 135 in the vertical direction. The height adjustment mechanism 122 allow the table 135 to be moved to a height that matches the height of the entrant P, that is, a height that allows the entrant P to easily place their fingers on the fingerprint scanners 120R and 120L. The height adjustment mechanism 122 also moves the touch panel 117 along the bar 134. Also, any mechanism for moving the touch panel 117 along the bar 134 may be used. For instance, a rail is provided on a front surface of the bar, and the touch panel 117 is fixed to a slider that can move up and down within the rail, so that by moving the slider up and down by the height adjustment mechanism 122, it is possible to move up and down the touch panel 117.

Above the table 135, the pair of the cameras 121R and 121L for hands is provided. The cameras 121R and 121L for hands capture a state in which the entrant P places the passport on the passport reader 119, a state in which fingers of the right hand and the left hand are placed on the fingerprint scanners 120, and the like. The camera 121R captures a right hand side of the entrant P, that is, a side of the fingerprint scanner 120R, and the camera 121L captures a left hand side of the entrant P, that is, a side of the fingerprint scanner 120L. The cameras 121 may be provided at the lower end of the touch panel 117 or may be provided on the bar 134 at a position behind the touch panel 117.

The base 132 is a housing provided at the lower end of the information processing device 100, and a removable battery, a spare battery, and the like are housed therein. Since the information processing device 100 is powered by a removable battery, it is possible to move and use the information processing device 100 at a location where there is no electrical outlet. The moving casters 133 are provided under the base 132, and the pair of moving handles 131 R and 131 L are provided at the lower end of the table 135. The concierge and other workers can move the information processing device 100 by holding the moving handles 131.

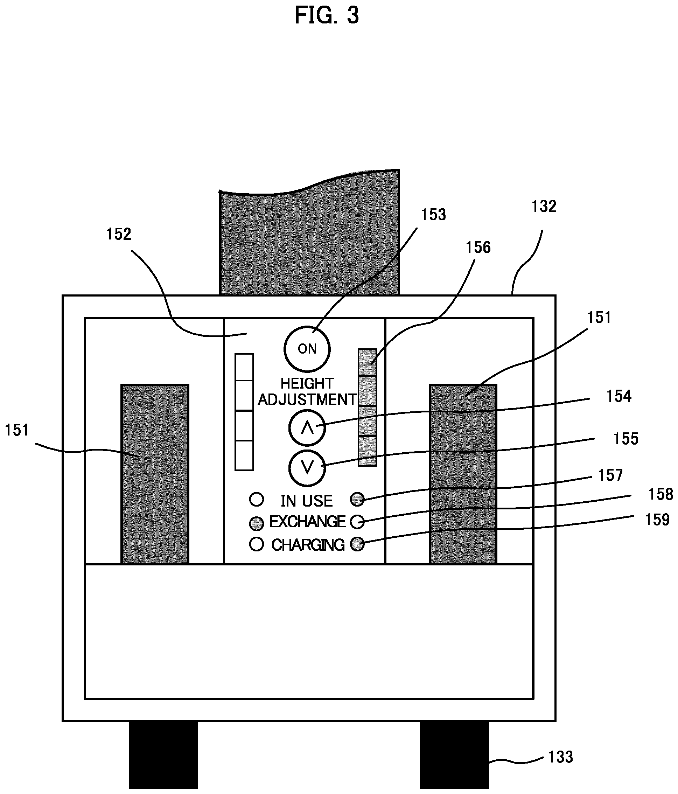

FIG. 3 illustrates an internal structure of the base 132. FIG. 3 illustrates a state in which a front panel of the base 132 is removed and an inside is viewed from the front. An operation panel 152 is provided in a center of the base 132, and batteries 151 are installed in a left space and a right space of the operation panel 152. One battery 151 is in use and another battery 151 is a spare battery. Each of the batteries 151 is electrically connected to a terminal in a state of being placed at a predetermined position, and is charged. The operation panel 152 is provided with a power button 153, and height adjustment buttons 154 and 155. The power button 153 is a main power button of the information processing device 100. The height adjustment buttons 154 and 155 are buttons for raising and lowering the touch panel 117 and the table 135 by the height adjustment mechanism 122, respectively.

In addition, the operation panel 152 includes remaining battery power indicators 156, in-use indicators 157, replacement indicators 158, and charging indicators 159 corresponding to respective batteries. The remaining battery power indicators 156 display the remaining power of respective batteries. Each in-use indicator 157 lights up when a corresponding battery is in use. Each replacement indicator 158 lights up when the corresponding battery needs to be replaced. Each charging indicator 159 lights up when the corresponding battery is charging.

### (Functional Configuration)

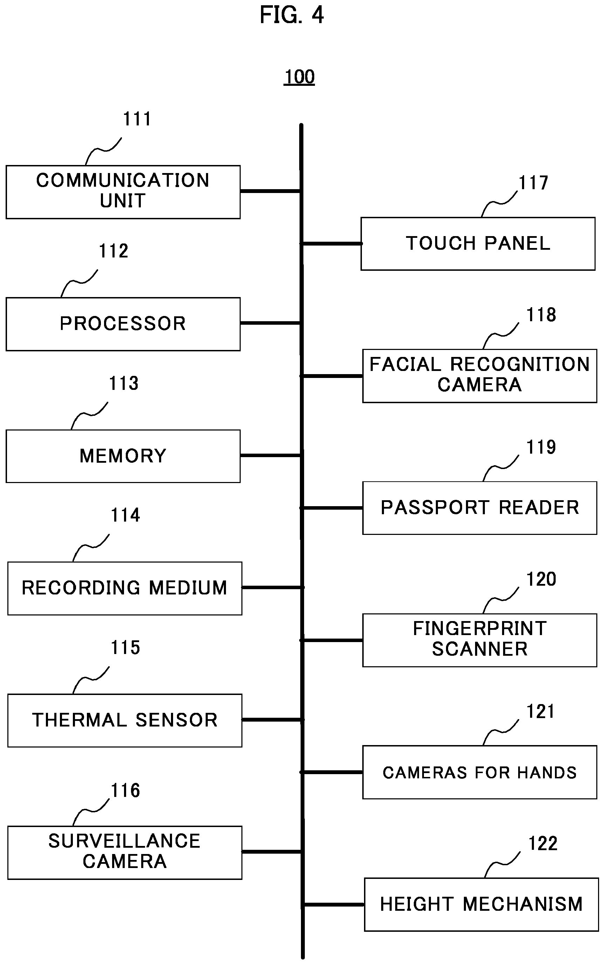

FIG. 4 is a block diagram illustrating a functional configuration of the information processing device 100. As illustrated, the information processing device 100 includes a communication unit 111, a processor 112, a memory 113, and a recording medium 114. The information processing device 100 further includes the thermal sensor 115, the surveillance camera 116, the touch panel 117, the facial recognition cameras 118, the passport reader 119, the fingerprint scanners 120, the cameras 121 for hands, and the height adjustment mechanism 122, which are described with reference to FIG. 2.

The communication unit 111 transmits and receives data to and from an external device. In detail, the communication unit 111 transmits and receives information to and from the management server 200. In addition, in a case where the information processing device 100 is capable of directly communicating with the tablet 300 or the PC 5 of the passport control booth, the communication unit 111 transmits and receives information to and from the tablet 300 or the PC 5.

The processor 112 corresponds to one or more processors each being a computer such as a CPU (Central Processing Unit), and controls the entire information processing device 100 by executing programs prepared in advance. The processor 112 may be a GPU (Graphics Processing Unit), a FPGA (Field-Programmable Gate Array), a DSP (Demand-Side Platform), an ASIC (Application Specific Integrated Circuit), or the like. Specifically, the processor 112 performs various processes, such as a passport process, a facial image process, a fingerprint collection process, and an ED card process, which will be described later.

The memory 113 is formed by a ROM (Read Only Memory), a RAM (Random Access Memory), and the like. The memory 113 is also used as a working memory during executions of various processes by the processor 112.

The recording medium 114 is a non-volatile and non-transitory recording medium such as a disk-shaped recording medium or a semiconductor memory and is formed to be detachable from the information processing device 100. The recording medium 114 records various programs executed by the processor 112. When the information processing device 100 executes various kinds of processes, the programs recorded on the recording medium 114 are loaded into the memory 113, and executed by the processor 112.

### [Management Server]

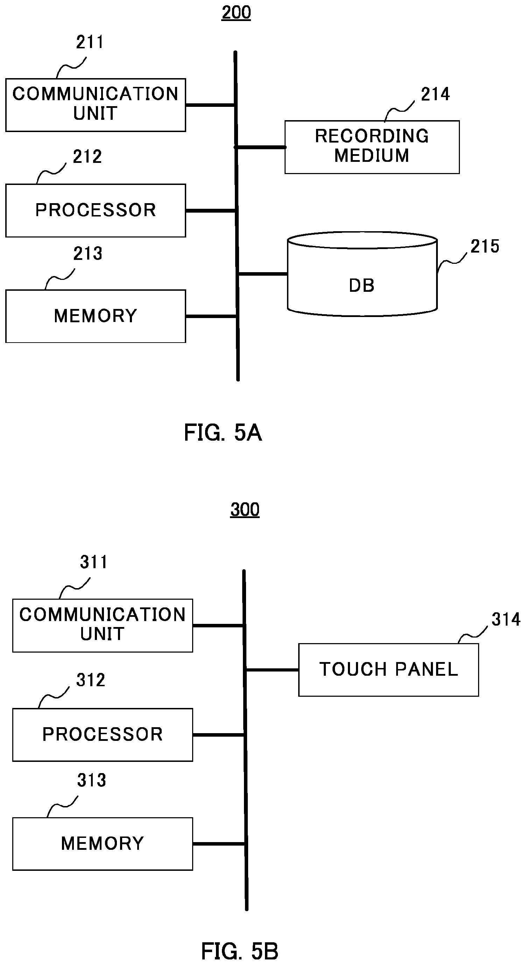

FIG. 5A is a block diagram illustrating a functional configuration of the management server 200. As illustrated, the management server 200 includes a communication unit 211, a processor 212, a memory 213, a recording medium 214, and a database 215.

The communication unit 211 transmits and receives data to and from an external device. In detail, the communication unit 211 transmits and receives information to and from the information processing device 100, the tablet 300 used by the concierge, and the PC 5 of the passport control booth.

The processor 212 corresponds to one or more processors each being a computer such as a CPU that controls the entire management server 200 by executing programs prepared in advance. The processor 212 may be a GPU, a FPGA, a DSP, an ASIC or the like. In detail, the processor 212 receives information acquired by the information processing device 100 from the entrant P, and stores the information in the DB 215 or transmits the information of the entrant P to the PC 5 of the passport control booth.

The memory 213 is formed by a ROM, a RAM, and the like. The memory 213 is also used as a working memory during executions of various processes by the processor 212.

The recording medium 214 is a non-volatile and non-transitory recording medium such as a disk-shaped recording medium or a semiconductor memory and is formed to be detachable from the management server 200. The recording medium 214 records various programs executed by the processor 212. When the management server 200 executes various kinds of processes, the programs recorded in the recording medium 214 are loaded into the memory 213 and executed by the processor 212.

The database 215 stores the personal identification information of the entrant P received through the communication unit 211 and information indicating an operation state of the information processing device 100. The management server 200 may include a keyboard, an input section such as a mouse, and a display section such as a liquid crystal display to allow an administrator to make instructions or inputs.

### [Tablet]

FIG. 5B is a block diagram illustrating an internal configuration of the tablet 300 used by the concierge. As illustrated, the tablet 300 includes a communication unit 311, a processor 312, a memory 313, and a touch panel 314.

The communication unit 311 transmits and receives data to and from the external device. In detail, the communication unit 311 transmits and receives information to and from the management server 200. In addition, when the tablet 300 is capable of directly communicating with the information processing device 100 or the PC 5 of the passport control booth, the communication unit 311 transmits and receives information to and from the information processing device 100 and the PC 5.

The processor 312 corresponds to one or more processors each being a computer such as a CPU that controls the entire tablet 300 by executing programs prepared in advance. The processor 312 may be a GPU, a FPGA, a DSP, an ASIC or the like. In detail, the processor 312 receives information indicating the state of the information processing device 100 or the operation state of the entrant P from the management server 200 or the information processing device 100, and displays the information on the touch panel 314.

The memory 313 is formed by a ROM and a RAM. The memory 313 is also used as a working memory during executions of various processes by the processor 312. The touch panel 314 displays information indicating the state of the information processing device 100 in charge of the concierge carrying the tablet 300 or the operation state by the entrant P.

### [Processes of the Information Processing Device]

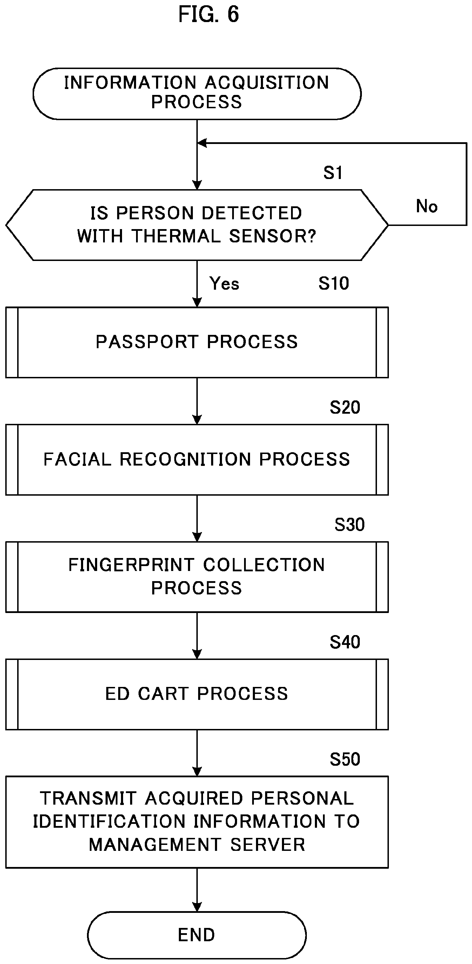

Next, processes executed by the information processing device 100 will be described. FIG. 6 is a flowchart of an information acquisition process that is executed by the information processing device 100. This information acquisition process is realized by executing a program prepared in advance by the processor 112 illustrated in FIG. 4.

The information processing device 100 is in a sleep state during no operation by the entrant P, and detects the front of the information processing device 100 with the thermal sensor 115 (step S 1). The "front" of the information processing device 100 is an area where the entrant P who operates the information processing device 100 stands, and is, for instance, an area depicted by dashed lines 170 in FIG. 2. When the entrant P stands in front of the information processing device 100, the thermal sensor 115 detects the entrant P (step S1: Yes), and the information processing device 100 executes the passport process (step S10). The passport process is a process for reading the passport information from the passport of the entrant P.

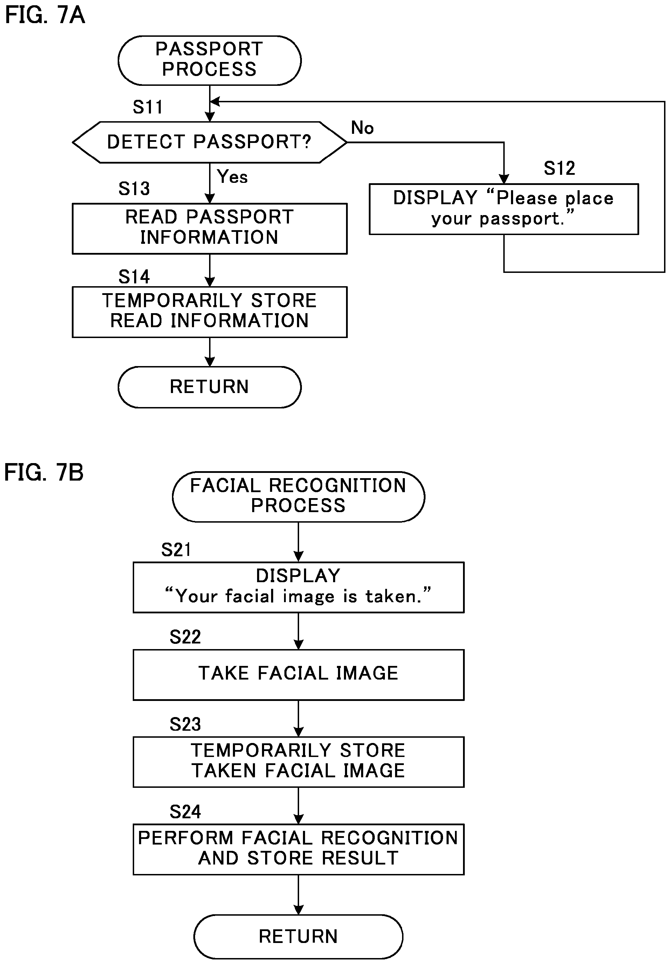

FIG. 7A is a flowchart of the passport process. In detail, the information processing device 100 detects each passport by the passport reader 119 (step S 11). When the passport is not detected (step S11: No), the information processing device 100 displays a message such as "Please place your passport." on the touch panel 117 (step S12). On the other hand, when a passport is detected (step S11: Yes), the passport reader 119 reads the passport information from the IC chip in the passport (step S13). Here, the passport information includes identification items such as a nationality, a name, a date of birth, a passport number, and the like, as well as a facial image read from the photograph affixed to the passport application form. Next, the information processing device 110 temporarily stores the read passport information in the memory 113 (step S14). After that, the process returns to a main routine in FIG. 6.

Next, the information processing device 100 executes the facial recognition process (step S20). The facial recognition process is a process in which a facial image of the entrant P is taken and the facial recognition is performed by matching with the facial image included in the passport information. FIG. 7B is a flowchart of the facial recognition process. First, the information processing device 100 displays a message such as "Your facial image is taken." on the touch panel 117 (step S21). In addition, if necessary, the information processing device 100 may display a numeral of a countdown indicating a photograph timing or the like. Next, the facial recognition camera 118 captures a facial image of the entrant P (step S22). At this time, the information processing device 100 takes an image of the entrant P using one of the facial recognition cameras 118A and 118B depending on the height of the entrant P.

Next, the information processing device 100 temporarily stores the facial image captured by the facial recognition camera 118 in the memory 113 (step S23). Next, the information processing device 100 performs the facial recognition by matching the facial image captured by the facial recognition camera 118 with the facial image included in the passport information read from the passport, and stores a recognition result in the memory 113 (step S24). After that, the process returns to the main routine in FIG. 6.

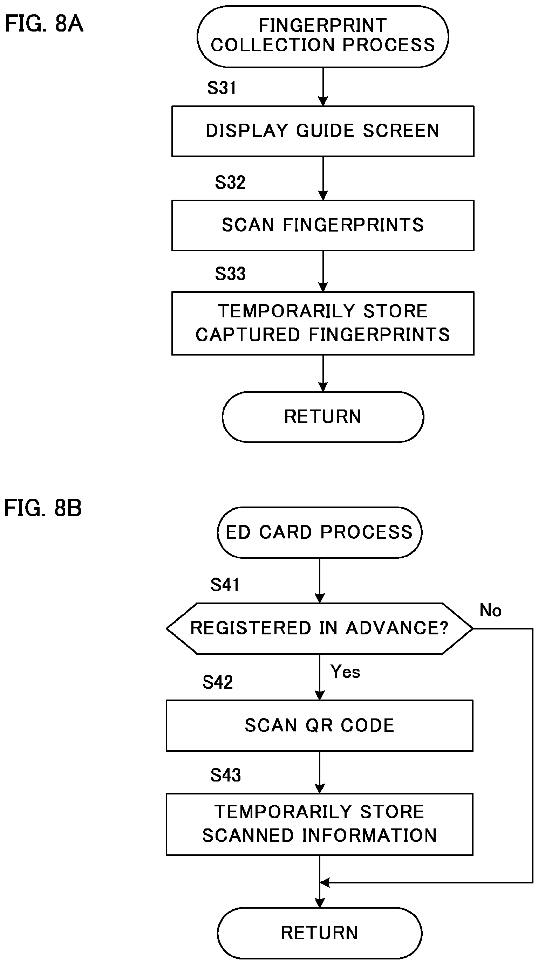

Next, the information processing device 100 performs the fingerprint collection process (step S30). The fingerprint collection process is a process which collects fingerprints of the entrant P. In detail, the fingerprint collection process takes fingerprints of index fingers of the right hand and the left hand of the entrant P. FIG. 8A is a flowchart of the fingerprint collection process. First, the information processing device 100 displays a guide screen for taking fingerprints on the touch panel 117 (step S31). For instance, the information processing device 100 displays, on the touch panel 117, a guide image indicating an arrangement method of fingers on the fingerprint scanners 120 or the like. Next, each of the fingerprint scanners 120R and 120L scans the fingerprints of the index fingers of the entrant P (step S32), and temporarily stores the fingerprint images in the memory 113 (step S33). After that, the process returns to the main routine in FIG. 6.

Next, the information processing device 100 performs an ED (Embarkation Disembarkation) card process (step S40). The ED card is regarded as a card in which necessary items are filled in when entering and leaving the country of travel, and is also called an immigration card. An ED card process corresponds to a process in which ED information registered in advance by the entrant P is scanned from a terminal device such as a smartphone of the entrant P. When the entrant P has registered the ED information in advance, a QR code (registered trademark) associated with the registered ED information is issued, and the entrant P stores this code in the smartphone.

FIG. 8B is a flow chart of the ED card process. First, the information processing device 100 asks whether the entrant P has registered the ED information in advance (step S41). When the ED has not been registered yet (step S41: No), the ED card process is terminated. On the other hand, when the ED information has been registered in advance (step S41: Yes), the information processing device 100 scans the QR code displayed on the smartphone or the like by the entrant P (step S42). In detail, the entrant P displays the QR code on the smartphone, and holds the smartphone over the passport reader 119 or the like. The passport reader 119 reads the QR code from the smartphone. The information processing device 100 temporarily stores the read ED information in the memory 113 (step S43). After that, the process returns to the main routine in FIG. 6.

In the above-described example embodiment, the QR code is read by the passport reader 119, but the QR code may be read by the facial recognition cameras 118 or the cameras 121 for hands. An IC card reader may be provided in the information processing device 100 to perform wireless communications between the smartphone of the entrant P and the information processing device 100 to acquire registered ED from the smartphone of the entrant P.

Next, the information processing device 100 transmits the personal identification information acquired in steps S10 to S40 to the management server 200 (step S50). Here, the personal identification information transmitted to the management server 200 includes the passport information acquired by the passport process, the facial image and a facial recognition result acquired by the facial recognition process, the fingerprint images acquired by the fingerprint collection process, and the ED information acquired by the ED card process. At this time, the information processing device 100 displays a message such as "Please proceed to the passport control booth" on the touch panel 117 to urge the entrant P to proceed to the passport control booth.

### [Display Example of the Information Processing Device]

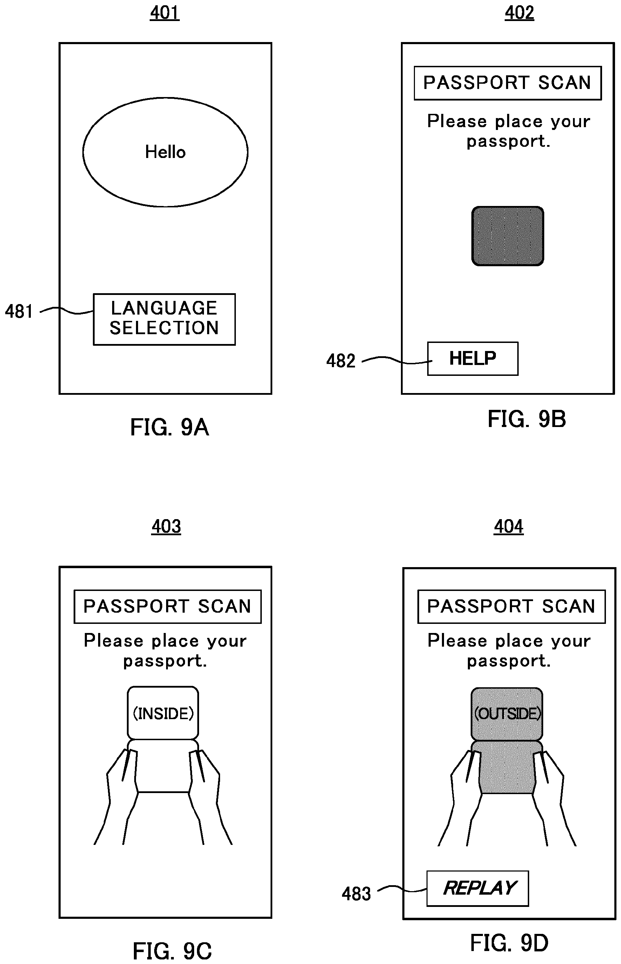

Next, an example of an image, which the information processing device 100 displays on the touch panel 117 in the above-described information acquisition process, will be described. Note that an order of the display examples described below is merely an example, and the display order can be arbitrarily changed. First, when the entrant P comes in front of the information processing device 100, and the thermal sensor 115 detects the entrant P, the information processing device 100 displays an initial image 401 illustrated in FIG. 9A on the touch panel 117. A language selection button 481 included in the initial image 401 will be described later.

Next, the information processing device 100 displays a guide image of a passport scan. In detail, the information processing device 100 sequentially displays images 402 to 404 depicted in FIG. 9B to FIG. 9D. Each of the images 402 to 404 contains a message requesting that the passport be placed on the passport reader 119. The image 402 depicts an appearance of the passport reader, the image 403 depicts that an outer face of the passport is overlaid on the passport reader 119, and the image 404 depicts that an inner face of the passport is overlaid on the passport reader 119. A help button 482 included in the image 402 and a replay button 483 included in the image 404 will be described later.

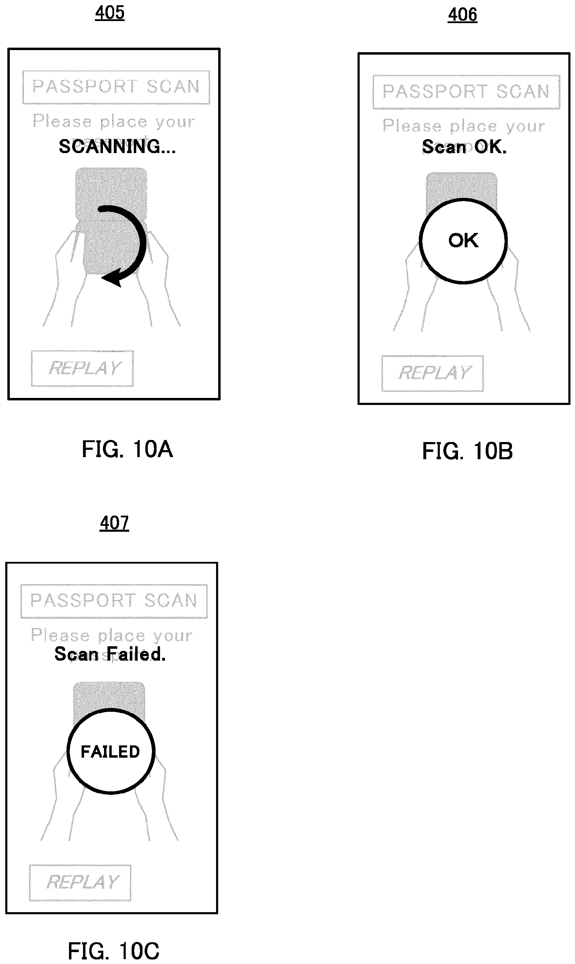

When the entrant P overlays the passport on the passport reader 119, an in-scanning image 405 depicted in FIG. 10A is displayed on the touch panel 117. When the passport is successfully scanned, an image 406 indicating a scan OK is displayed as illustrated in FIG. 10B. On the other hand, when the scanning of the passport fails, an image 407 indicating that the scan failed is displayed as illustrated in FIG. 10C. When the scanning of the passport fails, the entrant P tries again this scan operation of the passport.

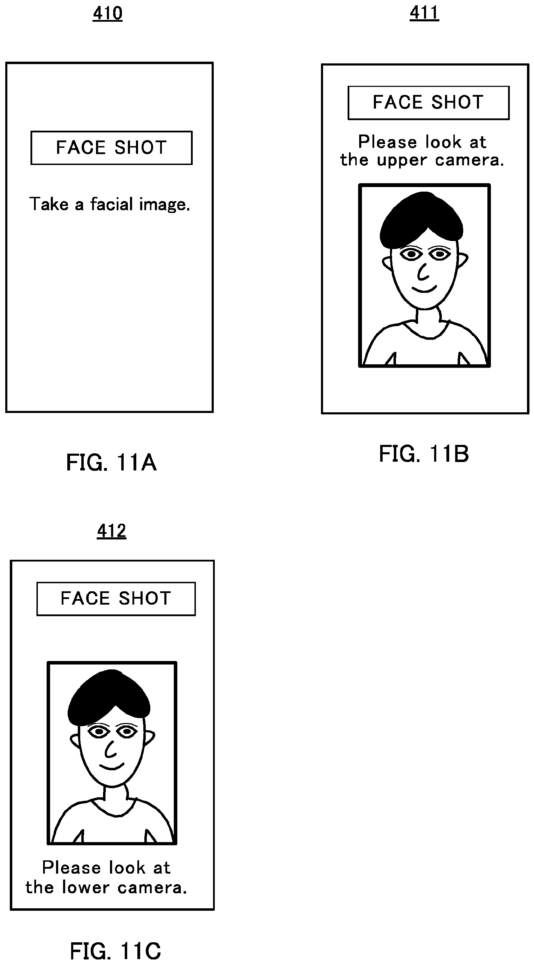

When the passport is successfully scanned, a guide image 410 for capturing a face is displayed as illustrated in FIG. 11A. The information processing device 100 determines which of the upper facial recognition camera 118A and the lower facial recognition camera 118B is to be used according to the height of the entrant P. When the upper facial recognition camera 118A is used, the information processing device 100 displays an image 411 illustrated in FIG. 11B, and prompts the entrant P to view the upper facial recognition camera 118A. On the other hand, when the facial recognition camera 118B on the lower face is used, the information processing device 100 displays an image 412 illustrated in FIG. 11C, and prompts the entrant P to look at the facial recognition camera 118B on the lower face.

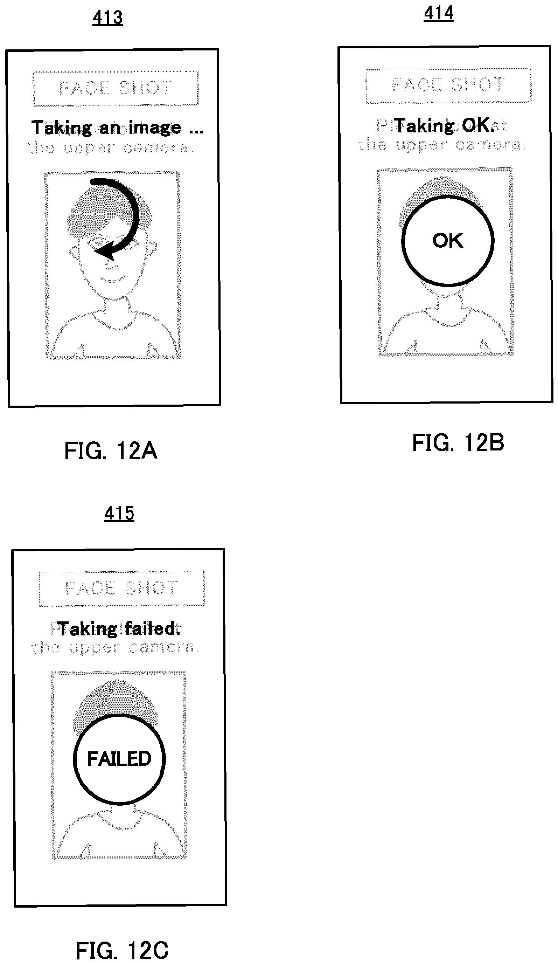

After that, when the facial recognition camera 118 starts taking the facial image, a taking-in-progress image 413 illustrated in FIG. 12A is displayed. When an appropriate facial image is captured, a taking OK image 414 illustrated in FIG. 12B is displayed. On the other hand, when the appropriate facial image is not captured, a taking failure image 415 illustrated in FIG. 12C is displayed.

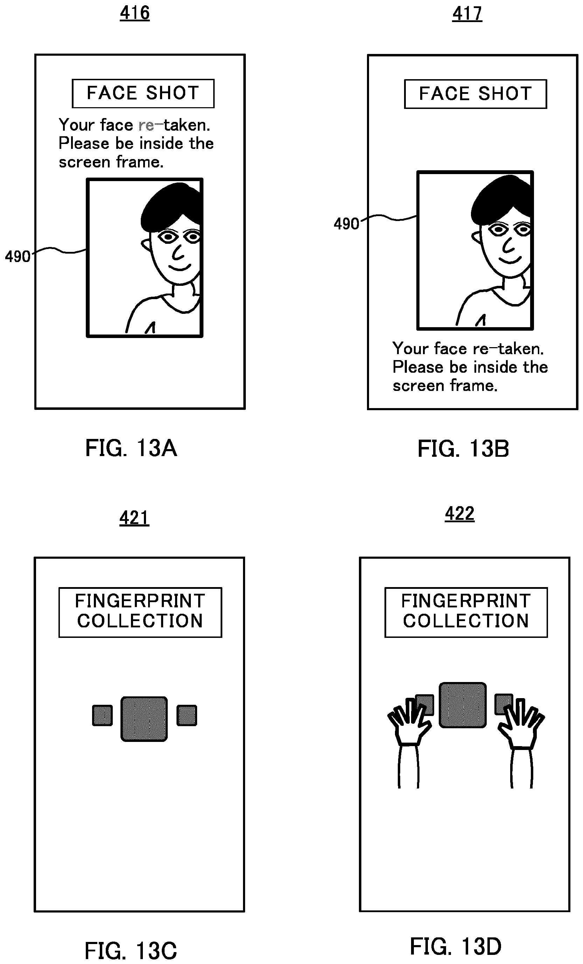

In a case of the taking failure, the information processing device 100 displays the guide information for appropriately taking the facial image. For instance, when the face of the entrant P is not within a photo frame 490 as illustrated in an image 416 in FIG. 13A, the information processing device 100 displays a message prompting the entrant P to be within the photo frame 490. Here, the information processing device 100 displays messages at respective positions corresponding to the facial recognition cameras 118 used for taking the facial image. In detail, in a case of taking the facial image by using the upper facial recognition camera 118A, the information processing device 100 displays a message at an upper side of the photo frame 490 as illustrated in the image 416 in FIG. 13A. On the other hand, when the facial recognition camera 118B on the lower face is used to take a facial image, the information processing device 100 displays a message on a lower side of the photo frame 490 as illustrated in an image 417 in FIG. 13B. In addition, in a case of taking facial images by using the two facial recognition cameras 118, the information processing device 100 can appropriately determine a place where the message is displayed, depending on the height of the entrant, a position of the face of the entrant in the image 416, or a position of a line of sight of the entrant which is detected based on the facial image.

In addition, other reasons why the taking of the facial image fails include that the entrant P is not looking at a direction of the camera or that the entrant P is wearing sunglasses or a mask. When the entrant P does not correctly look at a direction of the camera, a message such as "Please look at the camera" is displayed in the image 416 or 417, and when the entrant P is wearing the sunglasses or the mask, a message such as "Please take off the sunglasses (or the mask)" is displayed in the image 416 or 417.

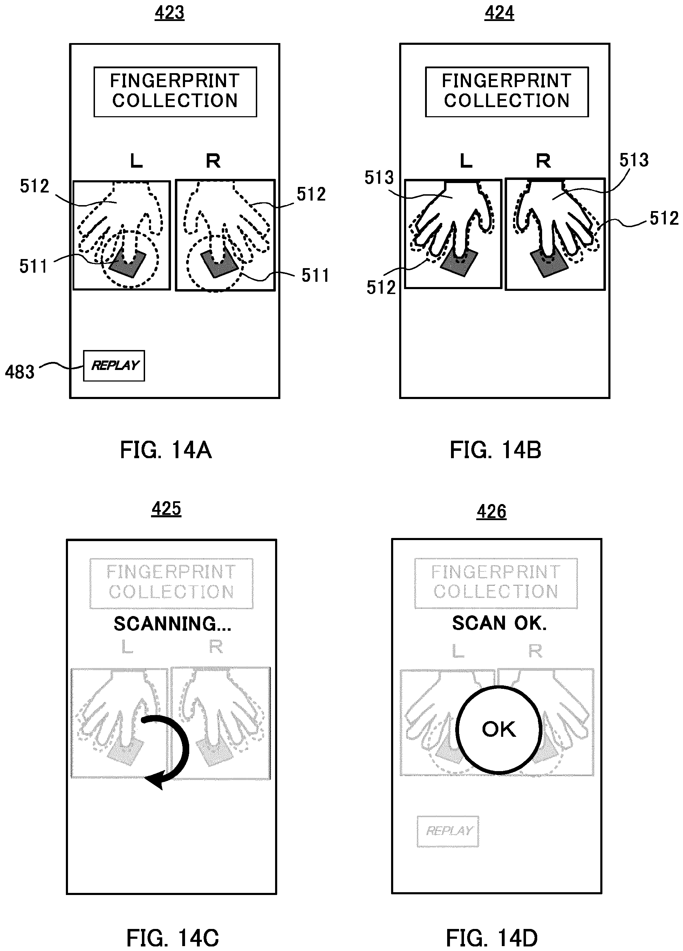

When the facial recognition process is completed, the fingerprint collection process is performed. The information processing device 100 first displays a guide image for explaining a method for collecting fingerprints. In detail, the information processing device 100 sequentially displays images 421 and 422 illustrated in FIG. 13C and FIG. 13D. The image 421 illustrates the fingerprint scanners, and the image 422 illustrates a placement example of fingers with respect to the fingerprint scanners. Subsequently, the information processing device 100 displays an image 423 illustrated in FIG. 14A. In the image 423, guide hands 512 indicating correct placements of the fingers of the right hand and the left hand are displayed on respective images near the left and right fingerprint scanners 120, which are taken by the cameras 121 for hands. In addition, dashed line circles 511 are displayed to indicate that respective index fingers are placed on the fingerprint scanners 120. Note that the replay button 483 will be described later.

When the entrant P actually places fingers on the fingerprint scanners 120, images are captured by the cameras 121 for hands. As illustrated in FIG. 14B, the information processing device 100 displays an image 424 including hands 513 of the entrant P captured by the cameras 121 for the hands. The entrant P refers to positions of the guide hands 512 in the image 424, and places hands of the entrant P in correct positions.

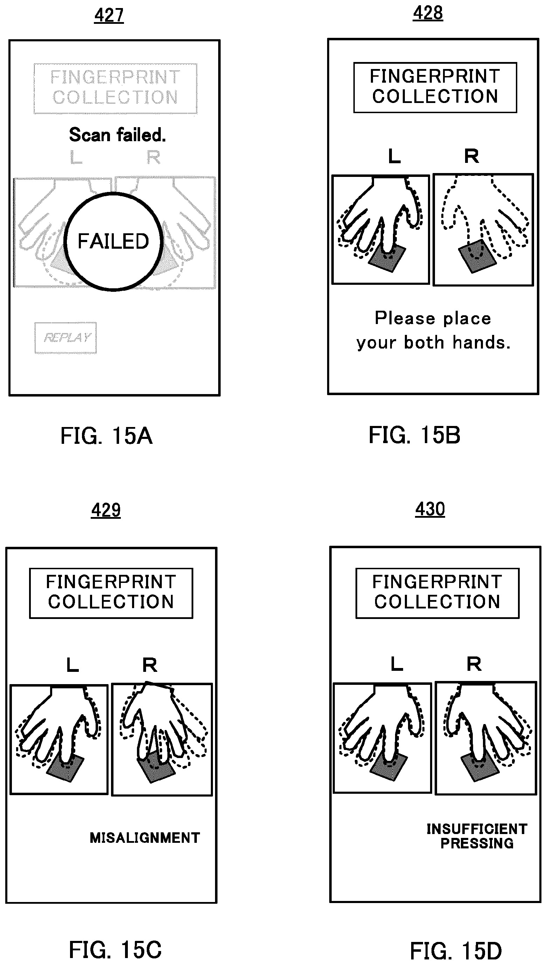

In response to contacts of the fingers of the entrant P, the fingerprint scanners 120 starts to scan the fingerprints, and a scan-in-progress image 425 illustrated in FIG. 14C is displayed. When the fingerprints are successfully scanned, a scan OK image 426 illustrated in FIG. 14D is displayed. On the other hand, when the scan of the fingerprints fails, a scan failure image 427 illustrated in FIG. 15A is displayed. The scan of the fingerprints may fail for several reasons. For instance, in a case where the entrant P is only one hand on the fingerprint scanners 120, the information processing device 100 displays an image 428 illustrated in FIG. 15B. In the image 428, a message is displayed to request that both hands be placed on the fingerprint scanners 120.

In a case where the fingers are misaligned with respect to the fingerprint scanners 120, the information processing device 100 displays an image 429 depicted in FIG. 15C. In the image 429, a message is displayed indicating that a position of the right hand is misaligned. In the image 429, since positions of the fingers of the left hand are not misaligned but the positions of the fingers of the right hand are misaligned, a message of "MISALIGNMENT" is displayed only under the image of the right hand. In a case where only the positions of the fingers of the left hand are misaligned, the message of "MISALIGNMENT" is displayed only under the image of the left hand. In addition, in a case where the positions of the fingers of both hands are misaligned, the messages of "MISALIGNMENT" are displayed under the images of both hands, respectively. In addition, when the facial recognition is performed using the lower facial recognition camera 118B, the message may be displayed on the lower side of the hand image, and when the facial recognition is performed using the upper facial recognition camera 118A, the message may be displayed on the upper side of the hand image. Moreover, depending on whether or not the positions of the fingers are correct, a color of the guide hands 512 or a thickness of a line may be changed. For instance, the guide hands 512 may be displayed in a first display (for instance, a dashed red line) until fingers are respectively placed in the correct positions, and the guide hands 512 may be displayed in a second display (for instance, a solid green line) when the fingers are respectively placed in the correct positions.

In a case where the fingers are not pressed sufficiently against the fingerprint scanners 120, the information processing device 100 displays an image 430 depicted in FIG. 15D. In the image 430, a message is displayed indicating insufficient pressure of the index finger of the right hand against the fingerprint scanners 120. Also, in this case, the message is displayed below the image of the fingers of either the right hand or the left hand of which the pressure of the fingers is insufficient. In this way, the information processing device 100 displays, on the touch panel 117, a reason why the scanning of the fingerprints has failed, and prompts to collect the fingerprints again.

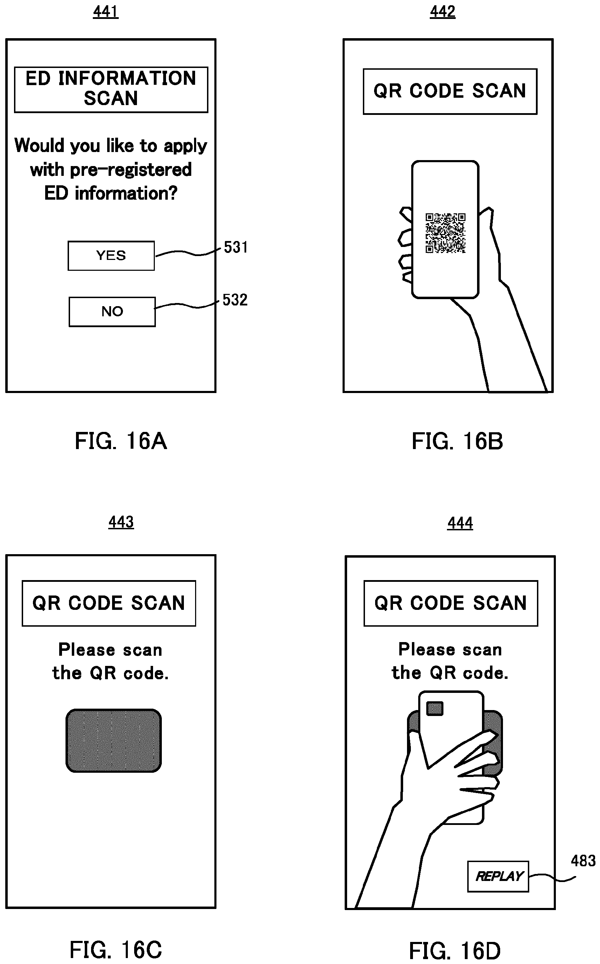

When the fingerprint collection process is completed, the ED card process is performed. The information processing device 100 first displays an image 441 depicted in FIG. 16A, and requests the entrant P whether to use the pre-registered ED information. The image 441 includes a YES button 531 and a NO button 532. When the entrant P presses the NO button 532, the ED card process is terminated. On the other hand, when the entrant P presses the YES button 531, the information processing device 100 displays a guide image of a scan operation of the QR code. Specifically, the information processing device 100 sequentially displays images 442 to 444 in FIG. 16B to 16D. The image 442 is an image that prompts to display the QR code corresponding to the pre-registered ED information on the smartphone. The image 443 illustrates the passport reader 119 for use in scanning the QR code. The image 444 illustrates that the QR code is held over the passport reader 119. Although the replay button 483 is displayed on the image 444, this button will be described later.

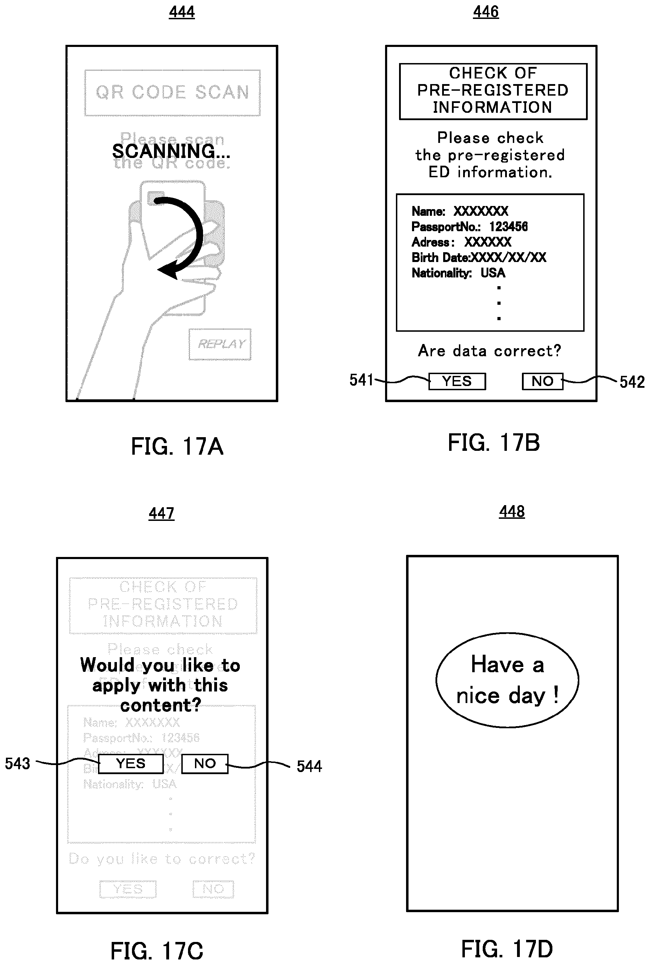

When the entrant P holds the QR code over the passport reader 119, the scanning of the QR code is started, and a scan-in-progress image 445 depicted in FIG. 17A is displayed. When the QR code is correctly scanned, an image 446 depicted in FIG. 17B is displayed. The image 446 includes the ED information registered in advance, a message prompting the entrant P to confirm whether or not correction is required, a YES button 541, and a NO button 542. The entrant P presses the YES button 541 or the NO button 542 depending on whether correction is necessary. When the YES button 541 is pressed, it becomes possible to input to the image 446, and the entrant P makes necessary correction. When there is no correction or the correction is completed, a confirmation image 447 depicted in FIG. 17C is displayed. The confirmation image 447 include a YES button 543 and a NO button 544. When the entrant P presses the NO button 544, this screen returns to the image 446 depicted in FIG. 17B. On the other hand, when the entrant P presses the YES button 543, an end screen 448 as depicted in FIG. 17D is displayed, and the information acquisition process is terminated.

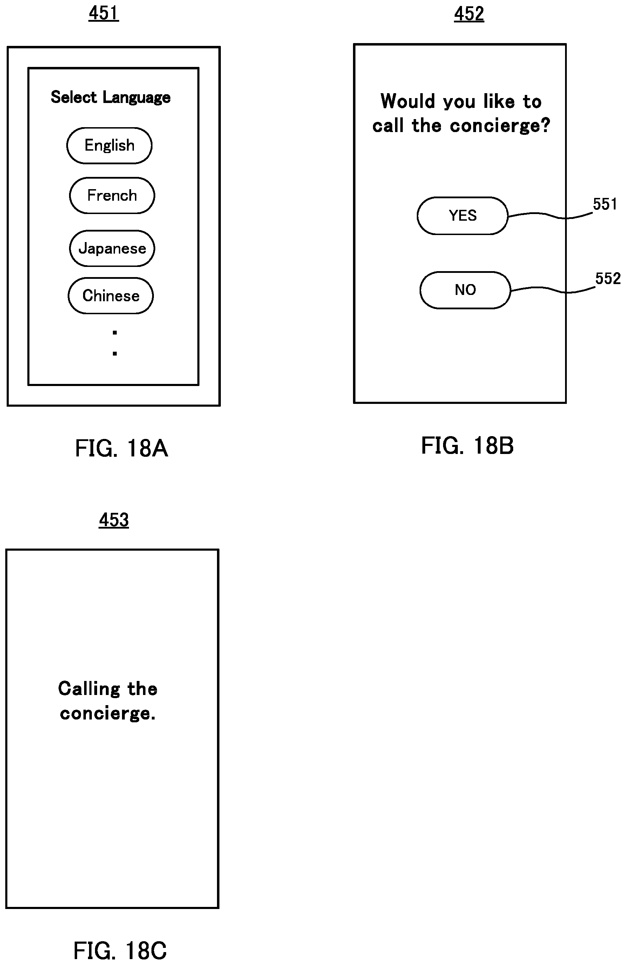

The language selection button and the help button can be displayed in all images or any of the images depicted in FIG. 9 to FIG. 17. FIG. 9A illustrates an example of an image in which the language selection button 481 is displayed. When the language selection button 481 is pressed, an image 451 depicted in FIG. 18A is displayed, and the entrant P can select one language used in operations of the information processing device 100.

The help button is used to call a concierge. FIG. 9B illustrates an example of an image in which the help button 482 is displayed. When the help button 482 is pressed, first, an image 452 depicted in FIG. 18B is displayed. In the image 452, when a YES button 551 is pressed, the information processing device 100 transmits call information to the tablet 300 of the concierge and displays an image 453 depicted in FIG. 18C. A NO button 552 is to cancel. When the concierge arrives at the information processing device 100, and performs a predetermined operation, the display of the image 453 is terminated.

Further, in each of the passport process, the facial recognition process, the fingerprint collection process, and the ED card process which are described above, the replay button can be displayed on an image following the guide image of the operation method of the information processing device 100. The replay button is a button for instructing a replay of the guide image indicating the operation method of the information processing device 100. In detail, the replay button 483 is displayed on the image 404 in FIG. 9D, the image 423 in FIG. 14A, the image 444 in FIG. 16D, and the like. The replay button 483 is a button for performing the replay of the guide image previously displayed. For instance, when the entrant P presses the replay button 483 in the image 404 in FIG. 9D, the images 402 to 404 in FIG. 9B to FIG. 9D are replayed in this order. When the entrant P presses the replay button 483 on the image 423 of FIG. 14A, images 421 to 423 of FIG. 13C and FIG. 14A are replayed in this order. Moreover, when the entrant P presses the replay button 483 on the image 444 in FIG. 16D, the images 442 to 444 in FIG. 16B to 16D are replayed in this order. In addition to the above, the replay button can be provided on the last image of a series of the guide images in the facial recognition process or the ED card process. In this case, when the replay button displayed at the end of the series of guide images related to the facial recognition process is pressed, a series of guide images related to the facial recognition process is replayed. Also, when the replay button displayed at an end of a series of the guide images for the ED card process is pressed, a series of the guide images for the ED card process is replayed. In a case where the replay button 483 is selected more than a predetermined number of times, the information processing device 100 may determine that the entrant P is in trouble with the operation method, and may automatically send an alert to call the concierge to the tablet 300.

### [Processes of Management Server]

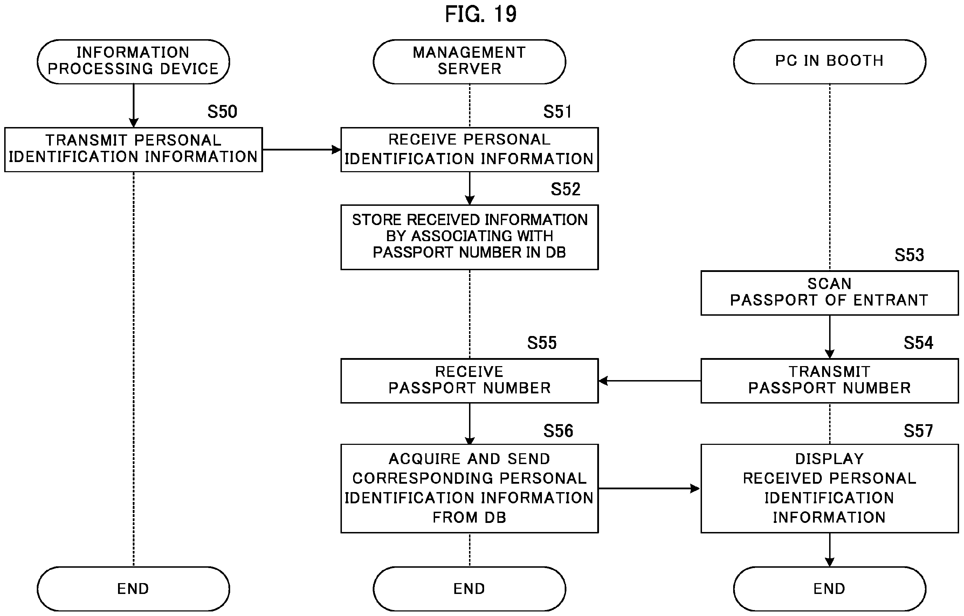

Next, processes of the management server performed in parallel with the information acquisition process will be described. FIG. 19 is a flowchart of an information management process performed by the management server 200. This information management process is realized by the processor 212 depicted in FIG. 5A executes a program prepared in advance.

First, the information processing device 100 transmits the acquired personal identification information to the management server 200 (step S50), and the management server 200 receives the personal identification information (step S51). Next, the management server 200 stores the received personal identification information in the DB 215 in association with the passport number (step S52). In this manner, the personal identification information provided by the entrant P by operating the information processing device 100 are accumulated in the DB 215 of the management server 200.

When the operation of the information processing device 100 is terminated, the entrant P goes to the passport control booth. When the entrant P presents a passport to the immigration officer at the passport control booth, the immigration officer reads the passport of the entrant P using the PC 5 (step S53). The PC 5 displays the scanned passport information on a display section or the like, and transmits a passport number to the management server 200 (step S54).

The management server 200 receives the passport number (step S55), acquires the personal identification information corresponding to the passport number from the DB 215, and transmits the acquired personal identification information to the PC 5 of the passport control booth (step S56). In the PC 5 of the passport control booth, the received personal identification information is displayed on the display section or the like (step S57). Accordingly, the personal identification information, which is acquired by the information processing device 100 regarding the entrant P who comes to the passport control booth, is displayed on the display section of the PC 5 in the passport control booth. The immigration officer examines whether or not to allow an entry into the country by referring to the facial image included in the displayed personal identification information, the facial recognition result, and the like.

Incidentally, when the entrant P who needs to provide information by the information processing device 100 has come to the passport control booth without performing an operation on the information processing device 100, the PC 5 in the passport control booth may report the tablet 300 of the concierge and display map information indicating an ID of the information processing device 100 available to use (which is used by no one) and a route to reach the information processing device 100 on the display section of the PC 5. In this case, the immigration officer can print out the map information described above and pass the map information to the entrant P, and correctly guide the entrant P to the information processing device 100.

### [Display Example of the Tablet]

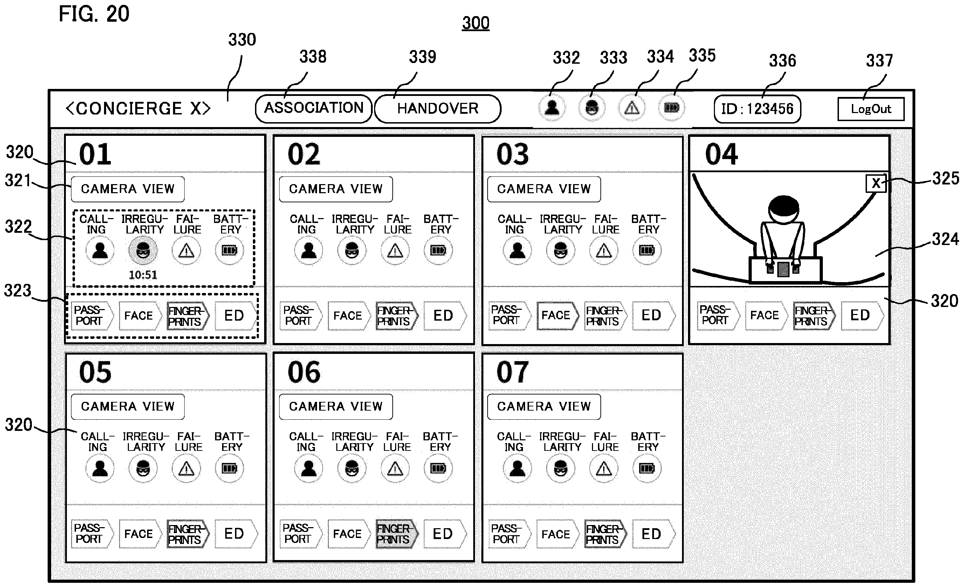

Next, an example of the display of the tablet 300 used by the concierge will be described. While the entrant P is operating the information processing device 100, the information processing device 100 acquires the personal identification information of the entrant P and transmits the personal identification information to the management server 200. The management server 200 transmits the acquired information to the tablet 300 carried by the concierge in charge. FIG. 20 illustrates an example display of the tablet 300 of the concierge. A plurality of the information processing devices 100 are associated with one concierge. The example display in FIG. 20 illustrates the display screen of the tablet 300 of the concierge X.

As illustrated, the tablet 300 displays a device list screen which displays information of the plurality of the information processing devices 100 associated with the concierge X. The device list screen includes an individual information area 320 for displaying individual information for each of the information processing devices 100 and an overall information area 330 for displaying overall information. In the example in FIG. 20, the concierge is in charge of seven information processing devices 100 of device numbers "01" to "07", and seven individual information areas 320 corresponding to respective information processing devices 100 are displayed.

Each of the individual information areas 320 includes a camera view button 321, an individual alert area 322, and a process display area 323. The camera view button 321 is a button for displaying the captured image of the surveillance camera 116. When the concierge presses the camera display button 321, a surveillance camera image 324 captured by the surveillance camera 116 is displayed as illustrated in the individual information area 320 of the device number "04" in FIG. 20. With the surveillance camera image 324 displayed, when the concierge presses a close button 325 in the surveillance camera image 324, the display of the surveillance camera image 324 ends.

The surveillance camera image 324 is an image of the entrant P captured by the surveillance camera 116 of the information processing device 100. As illustrated in FIG. 2, since the surveillance camera 116 is provided at the uppermost portion of the information processing device 100, the surveillance camera image 324 is an image such that the entrant P is viewed from obliquely above. Since the surveillance camera image 324 is an image including the entrant P and the table 135 of the information processing device 100 in front of the entrant P, the concierge can comprehend a state in which the entrant P is conducting operations by viewing at the surveillance camera image 324. Note that not only the image of the surveillance camera 116 but also images of the facial recognition cameras 118 or the cameras 121 for hands as the surveillance cameras may be used. In this case, the images of the facial recognition cameras 118 and the cameras 121 for the hands can also be displayed as the surveillance camera images 324.

The individual alert area 322 is an area for displaying an alert which is generated individually for each of the information processing devices 100 when the entrant P operates the information processing device. In the example in FIG. 20, four marks are displayed: "calling," "irregularity," "failure," and "battery". The "calling" mark is turned on when the entrant P has a trouble with the operation of the information processing device 100 and calls the concierge by pressing a call button or the like. The "irregularity" mark is turned on when the information processing device 100 detects an irregular operation of the entrant P, or blinks when two or more persons stand around one information processing device 100, for instance. The "failure" mark is turned on when an abnormality occurs in a hardware or the like of the information processing device 100. The "battery" mark is turned on when a remaining battery capacity of the information processing device 100 attains equal to or less than a predetermined value.

When the alert is generated in the information processing device 100, a corresponding mark in the individual alert area 322 is turned on, and an occurrence time of the alert is displayed. In the individual information area 320 of the device number "01" in FIG. 20, the alert mark of "irregularity" is turned on, and the occurrence time "10:51" of the alert is displayed. By this alert, the concierge can know a type and an occurrence time of the alert which has occurred in the information processing device 100 in charge. As the actual processing, when any of the above-described states is reached, the information processing device 100 transmits an alert signal indicating that the state to the management server 200 or directly transmits the alert signal to the tablet 300. The tablet 300 receives and displays the alert signal via the management server 200 or directly.

The process display area 323 indicates which process of the information acquisition process is conducted by the entrant P for each of the information processing devices 100. In detail, the process display area 323 includes marks for "passport", "face", "fingerprints", and "ED". The "passport" indicates the passport process, the "face" indicates the facial recognition process, the "fingerprints" indicates the fingerprint acquisition process, and the "ED" indicates the ED card process. In the display example in FIG. 20, the process display area 323 illustrates that entrants P at the device numbers "01" and "02" conduct the fingerprint collection process, an entrant P at the device number "03" conducts a facial recognition process, and entrants P at the device numbers "04" to "07" conduct the fingerprint collection process. It is noted that an alert is issued in one of the processes (processes), a corresponding mark is turned on. For instance, in each process, when the entrant P experiences two or more errors, or when the operation time of the entrant P exceeds the predetermined time, the mark of the process is turned on. In the display screen example in FIG. 20, the alert is generated in the fingerprint collection process of the entrant P at the device number "06", and the mark of "fingerprints" is turned on. By displaying the surveillance camera image and the process simultaneously, the concierge can view both the process being conducted by the entrant and the image illustrating the state, and it becomes possible for the concierge to easily confirm whether or not there is any suspicious action.

Note that the tablet 300 communicates with the information processing devices 100 to display respective images on corresponding process display areas 323, and acquires information indicating a process executed by each of the information processing devices 100. In this case, the information processing device 100 may identify the process being executed based on operation inputs of the entrant P or may analyze a behavior of the entrant P based on images from the surveillance camera 116, the facial recognition cameras 118, and the cameras 121 for hands to determine the process being executed. For instance, the information processing device 100 may determine that the fingerprint acquisition process is being executed when the entrant P places both hands on the fingerprint scanners 120.

The overall information area 330 includes marks 332 to 335 for overall alerts, a concierge ID 336, a logout button 337, an association button 338, and a handover button 339. The marks 332 to 335 in the overall alerts include a calling mark 332, an irregularity mark 333, a failure mark 334, and a battery mark 335. One or more marks 332 to 335 of the overall alerts are turned on when the alert occurs in one of the plurality of the information processing devices 100 in charge of the concierge X. For instance, the calling mark 332 is turned on when one or more information processing devices 100 of the device numbers "01" to "07" to be managed by the concierge X perform a calling process. The same applies to the irregularity mark 333, the failure mark 334, and the battery mark 335.

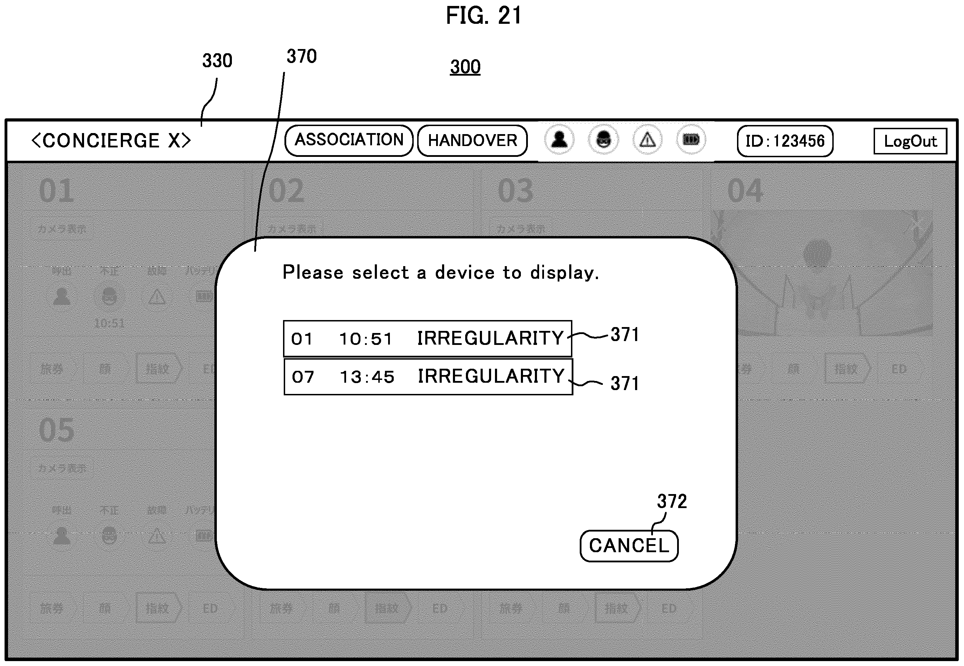

When the concierge X presses any lighted mark among the alert marks 332 to 335 of the overall alerts, an alert list 370 indicating details of that alert is displayed. FIG. 21 illustrates an example of the alert list 370 when the irregularity mark 333 is pressed. The alert list 370 displays a list of the information processing devices 100 on which an irregularity alert has occurred. In the example in FIG. 21, the alert list 370 indicates that the irregularity alert has occurred in the information processing devices 100 of the device numbers "01" and "07". When the concierge X presses a bar 371 of the displayed device number "01", a device list screen as illustrated in FIG. 20 is displayed, and the individual information area 320 of the device number "01" is temporarily turned on. Moreover, when the concierge X presses a cancel button 372, the display of the alert list 370 ends and the device list screen as illustrated in FIG. 20 is displayed.

In the above example, when any lighted mark among the marks 332 to 335 of the overall alerts is selected, the alert list concern the alert corresponding to the lighted mark is displayed. Alternatively, when any of the marks 332 to 335 is selected, an alert list containing all alerts in the four alerts occurring at that time may be displayed.

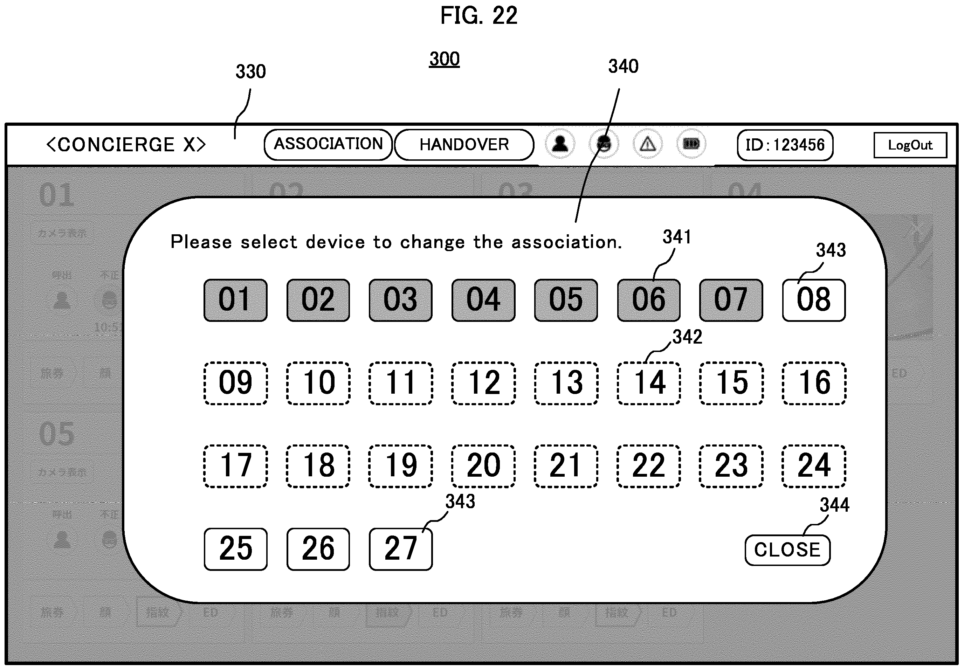

Next, the association of the information processing device will be described. The association button 338 described in FIG. 20 is a button for associating the information processing device 100 with the concierge X. When the concierge X presses the association button 338, an association window 340 described in FIG. 22 is displayed. In the association window 340, the information processing devices 100 are individually represented with device marks indicating device numbers. Among the device marks, colored device marks 341 indicate the information processing devices 100 which are associated with the concierge X that operates this tablet 300. Each device mark 342 with a dashed line indicates the information processing devices 100 which are associated with other concierges. Each device mark 343 with a solid line indicates the information processing devices 100 which are not associated with any of the concierges. In the example in FIG. 22, the device numbers "01" to "07" are associated with the concierge X, the information processing devices 100 of the device numbers "09" to "24" are associated with other concierges, and the device numbers "08" and "25" to "27" are not associated with any of the concierges.

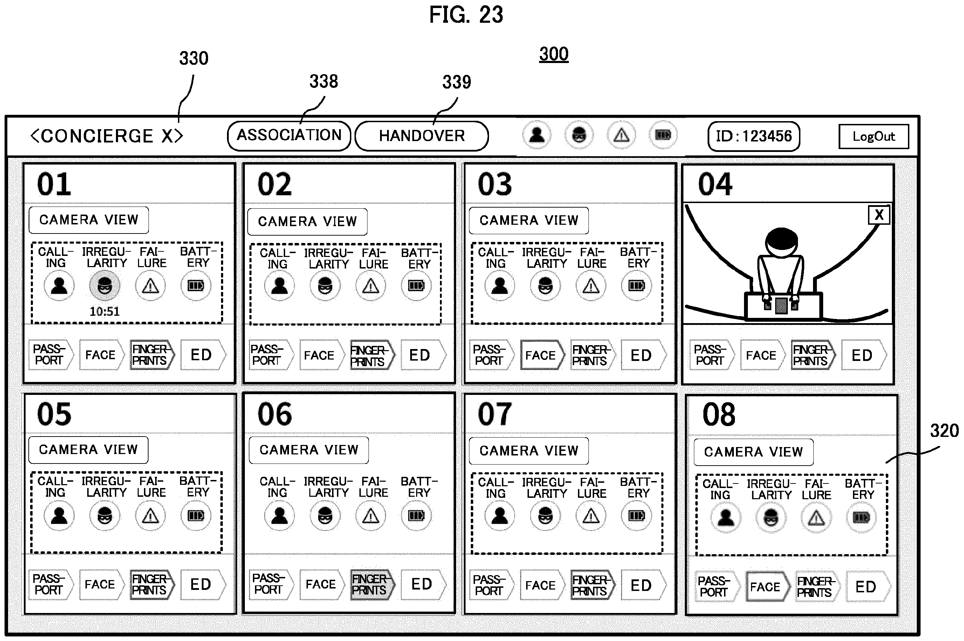

Here, when the concierge X presses a device mark 343 having the device number "08", the information processing device 100 having the device number "08" is associated with the concierge X. By pressing a close button 344, the association window 340 closes. FIG. 23 illustrates a device list screen after the information processing device 100 having the device number "08" is associated with the concierge X. As can be seen from the comparison with FIG. 20, the individual information area 320 for the information processing device of the device number "08" is added.

Next, an association release of the information processing device 100 will be described. The association release is an operation for releasing some or all of devices in charge from responsibility of the concierge. In a case of releasing the association, the concierge X presses the association button 338 to display the association window 340 illustrated in FIG. 22. Next, the concierge X may press the device mark 341 of the device number which is a subject to release the association.

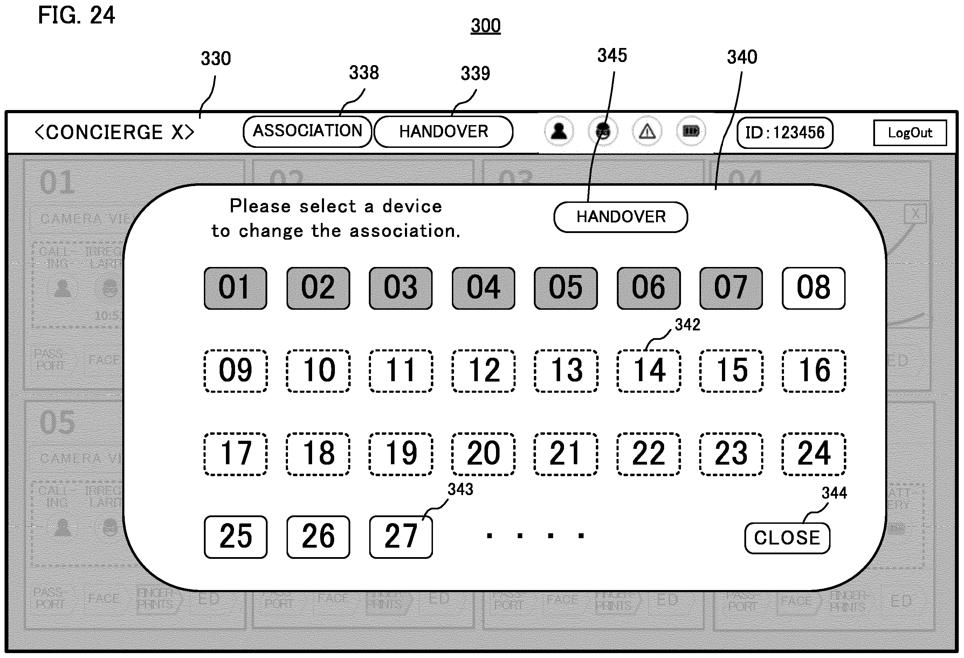

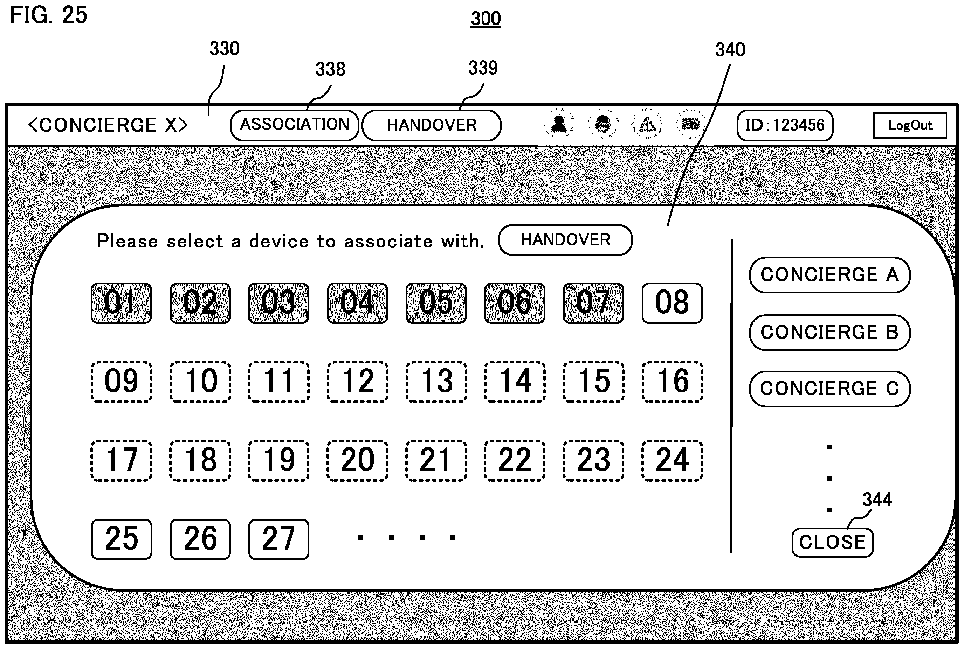

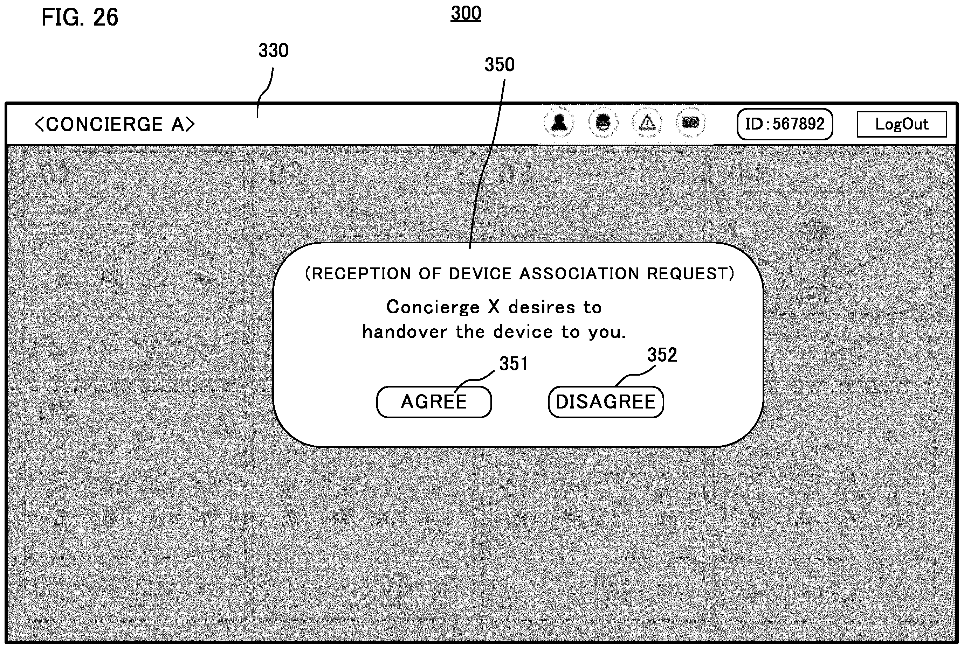

Next, a handover of the information processing device 100 will be described. The handover means handing over the device in charge of the concierge to other concierges. When the concierge X presses the handover button 339 illustrated in FIG. 20, the association window 340 illustrated in FIG. 24 is displayed. Now, when the concierge presses an association button 345, buttons 347 for designating one of the concierges of interest is displayed at a right side of the association window 340 as illustrated in FIG. 25. When the concierge X selects one button 347 of a concierge (concierge A) to be a handover destination to which the association is transferred, the tablet 300 of the concierge A as the handover destination displays a confirmation window 350 as illustrated in FIG. 26. The confirmation window 350 includes a message indicating that the handover has been requested, an agree button 351, and a disagree button 352. When the concierge A, who is to be the handover destination, presses the agree button 351, the association is performed, and the information processing device 100 in charge of the concierge X is passed to the concierge A. On the other hand, when the concierge A presses the disagree button 352, the handover is not performed.

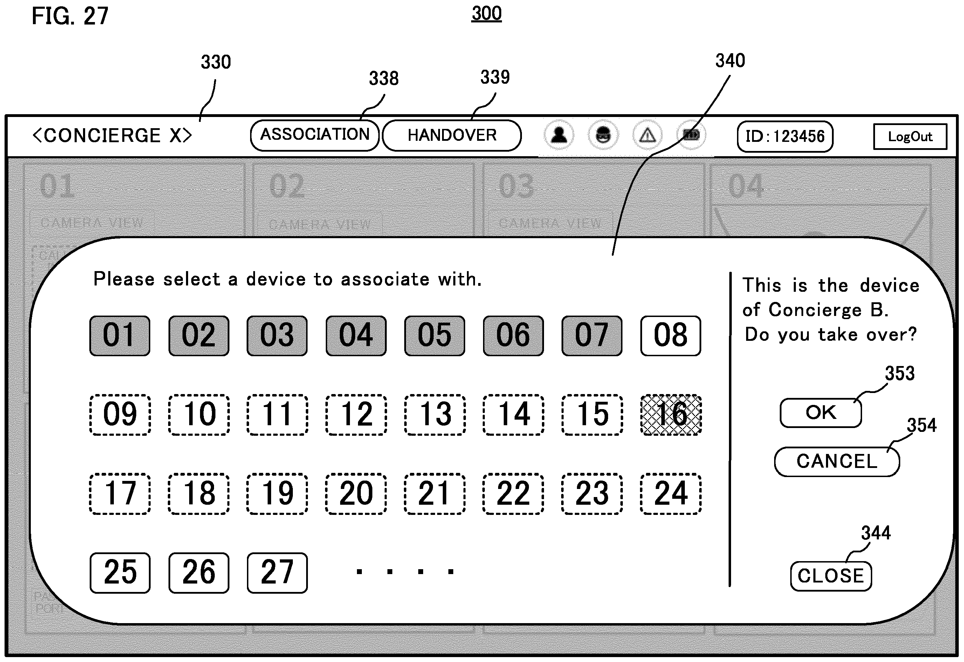

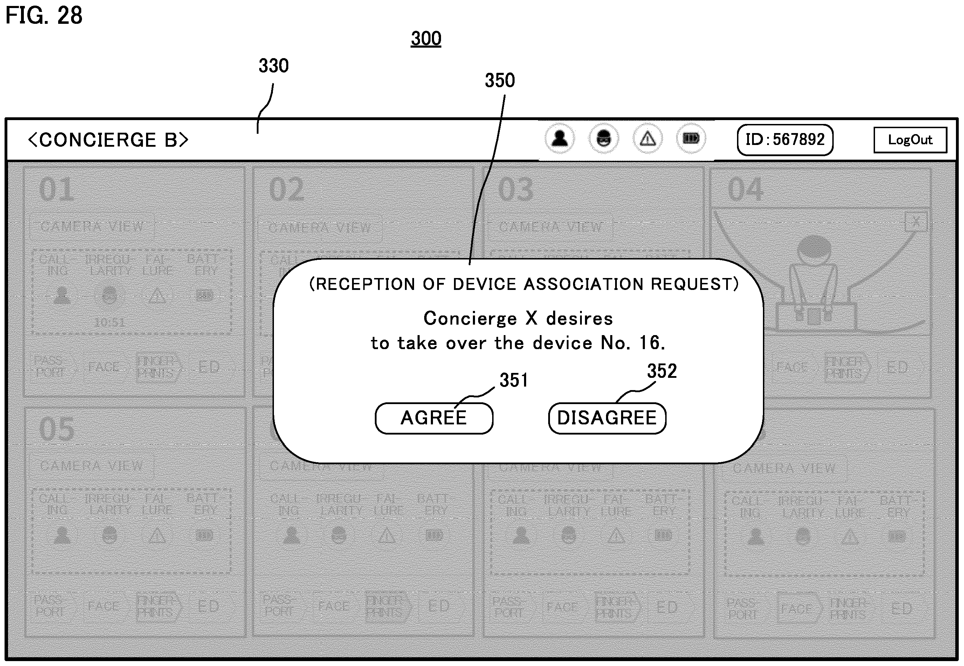

Next, a takeover of the information processing device 100. The takeover refers to change the responsibility of another concierge to be the responsibility of oneself, for that device. In a case of the takeover, when the concierge X presses the handover button 339 illustrated in FIG. 20, the association window 340 illustrated in FIG. 24 is displayed. Here, when the concierge X presses the device mark of the device number "16" which another concierge is in charge of, for instance, a message indicating that the selected information processing device 100 is in charge of another concierge (referred to as a concierge B), an OK button 353, and a cancel button 354 are displayed at the right side of the association window 340 as illustrated in FIG. 27. When the concierge X presses the OK button 353, the confirmation window 350 is displayed on the tablet 300 of the concierge B in charge of the device number 16 as illustrated in FIG. 28. The confirmation window 350 includes a message indicating that the takeover has been requested, the agree button 351, and the disagree button 352. When the concierge B presses the agree button 351, the takeover is performed and the information processing device 100 having the device number "16" in charge of the concierge B is taken over to the concierge X. On the other hand, when the concierge B presses the disagree button 352, the takeover is not performed.

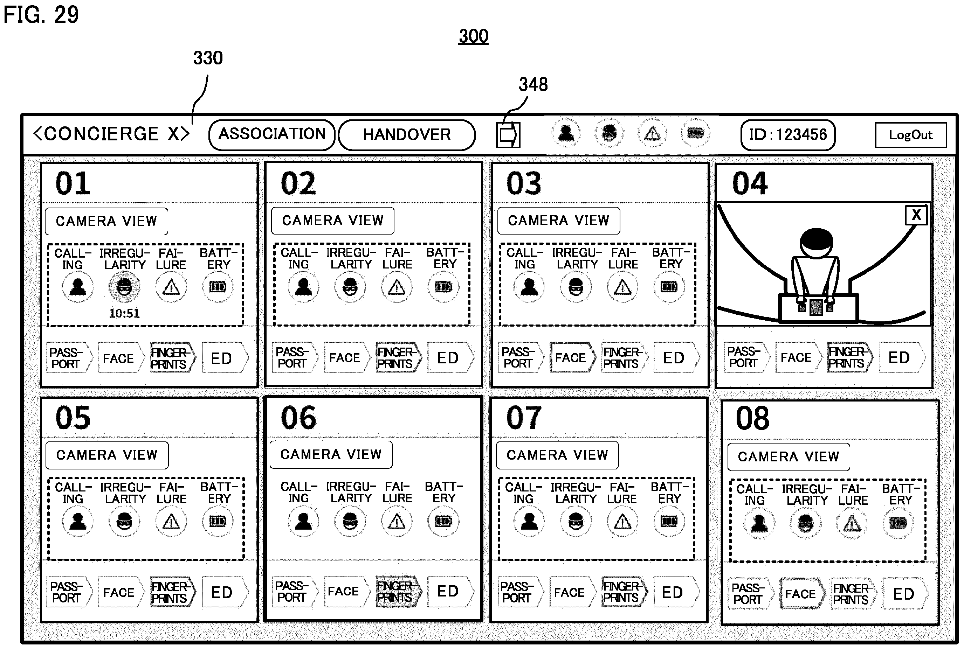

Next, a page forwarding of the device list screen will be described. In the above example, the concierge X is in charge of 8 devices or less, but in a case where one concierge is in charge of nine or more information processing devices 100, the device list screen illustrated in FIG. 20 spans a plurality of pages. In this case, the concierge can navigate among the plurality of pages by flicking the page in the device list screen. For instance, in a case where the concierge X is in charge of nine or more information processing devices, the concierge X can flick a first page of the device list screen to the left to display a second page corresponding to a ninth and subsequent devices. The concierge X can also return to the first page by flicking the second page to the right. Alternatively, instead of flicking pages, as illustrated in FIG. 29, a page move button 348 may be provided to move the page when the page move button 348 is pressed.

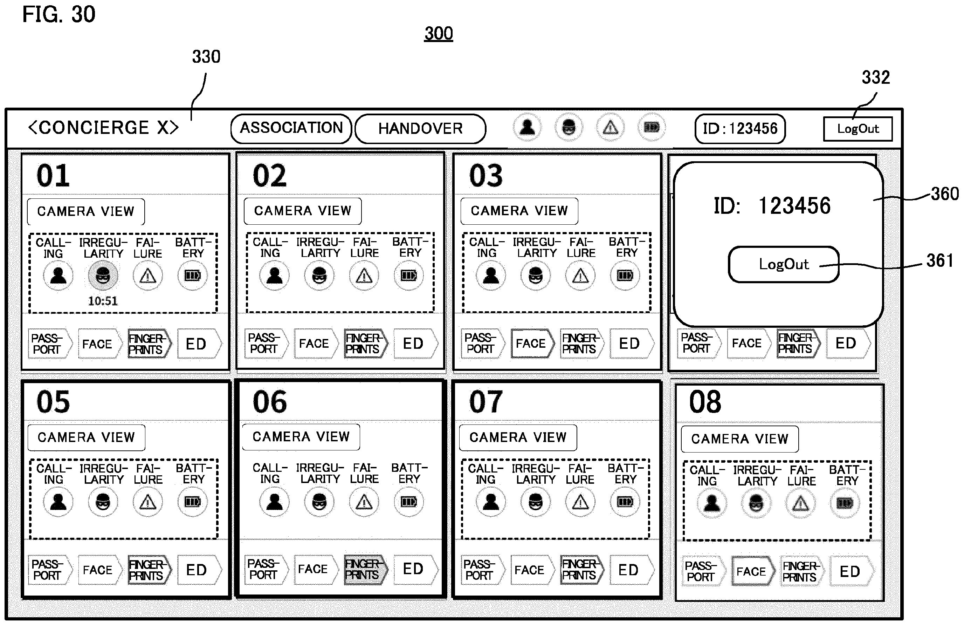

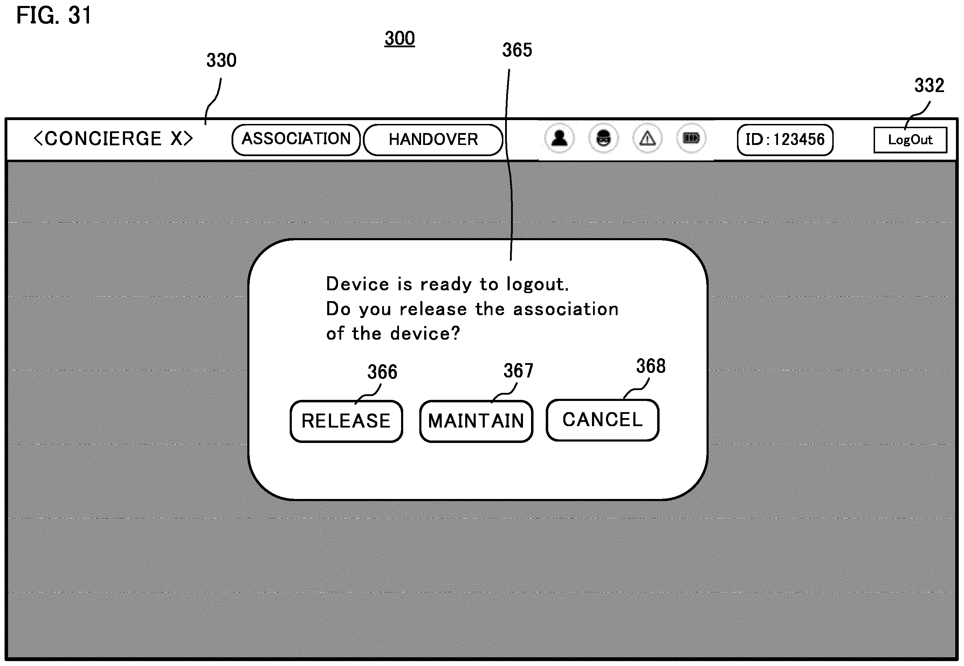

Next, a logout from the tablet will now be described. When the concierge X presses the logout button 337 illustrated in FIG. 20, a logout window 360 is displayed as illustrated in FIG. 30. When the concierge X presses a logout button 361 in the logout window 360, a confirmation window 365 illustrated in FIG. 31 is displayed. The confirmation window 365 includes a button 366 for releasing the association of a responsible device, a button 367 for retaining the association, and a button 368 for canceling the logout. When the concierge X selects the button 366, the association of each of the information processing devices 100 in charge is released, and the concierge X can log out. When the concierge X presses the button 367, the associations with the information processing devices 100 in charge are retained, and the concierge X can log out. The logout is canceled when the concierge X presses the button 368.

### <Second Example Embodiment>

Next, a second example embodiment of the present disclosure will be described.

### [Basic Concept]

A configuration of the information processing device 100 according to the second example embodiment is basically the same as that of the first example embodiment, and includes an external configuration illustrated in FIG. 2 and an internal configuration illustrated in FIG. 4. However, the information processing device 100 according to the second example embodiment differs from the first example embodiment in the facial recognition process executed in step S20 of the information acquisition process illustrated in FIG. 6.

In detail, in the first example embodiment, after the passport process is completed in the information acquisition process, the information processing device 100 captures facial images of the entrant P in the facial recognition process to perform the facial recognition. In contrast, in the second example embodiment, the information processing device 100 starts taking facial images of the entrant P when the entrant P enters a detection range of the thermal sensor 115 in front of the information processing device 100. That is, the information processing device 100 captures the facial image of the entrant P before and during the execution of the passport process. Note that in order for the entrant P to determine a use state of the information processing device 100 even from a distance, a use state (for instance, usable, unusable, or the like) of the information processing device 100 may be displayed on the touch panel 117 or a floor or the like near the information processing device 100. When a facial image suitable for the facial recognition (hereinafter, referred to as a "suitable facial image") is acquired until the passport process ends, the facial recognition process is executed using the facial image. That is, when the suitable facial image is acquired during the passport process, the process for capturing facial images of the entrant P is omitted in the facial recognition process.

Here, the "suitable facial image" means a facial image which can be used for the facial recognition. In detail, whether or not the facial image corresponds to the suitable facial image is determined by considering whether an orientation of the face in the facial image is appropriate, that is, whether all parts of the face such as eyes, a nose, and a mouth are captured, whether a resolution of the image is sufficient, whether the image is blurred, and the like.

### [Processing Flow]

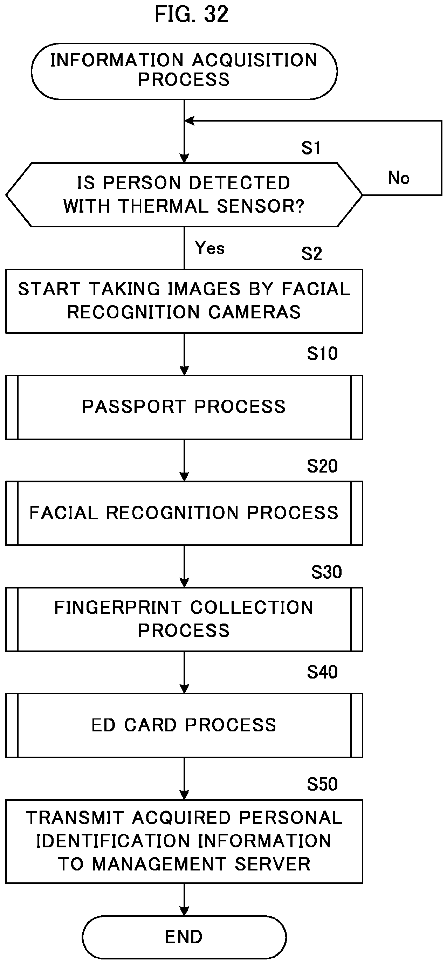

FIG. 32 is a flowchart of the information acquisition process according to the second example embodiment. This information acquisition process is realized by executing a program prepared in advance by the processor 112.

The information processing device 100 is in a sleep state when being not operated by the entrant P, and detects the front of the information processing device 100 by the thermal sensor 115 (step S1). When the entrant P stands in front of the information processing device 100, the thermal sensor 115 detects the entrant P (step S 1: Yes), and the information processing device 100 turns on the facial recognition cameras 118 to start taking images of the entrant P (step S2). Subsequently, the information processing device 100 executes the passport process (step S10). Accordingly, the facial recognition cameras 118 continue to take facial images of the entrant P from when the entrant P enters the detection range of the thermal sensor 115 until when the entrant P is in front of the information processing device 100 and completes the passport process. When the passport process is completed, the information processing device 100 executes the facial recognition process (step S20).

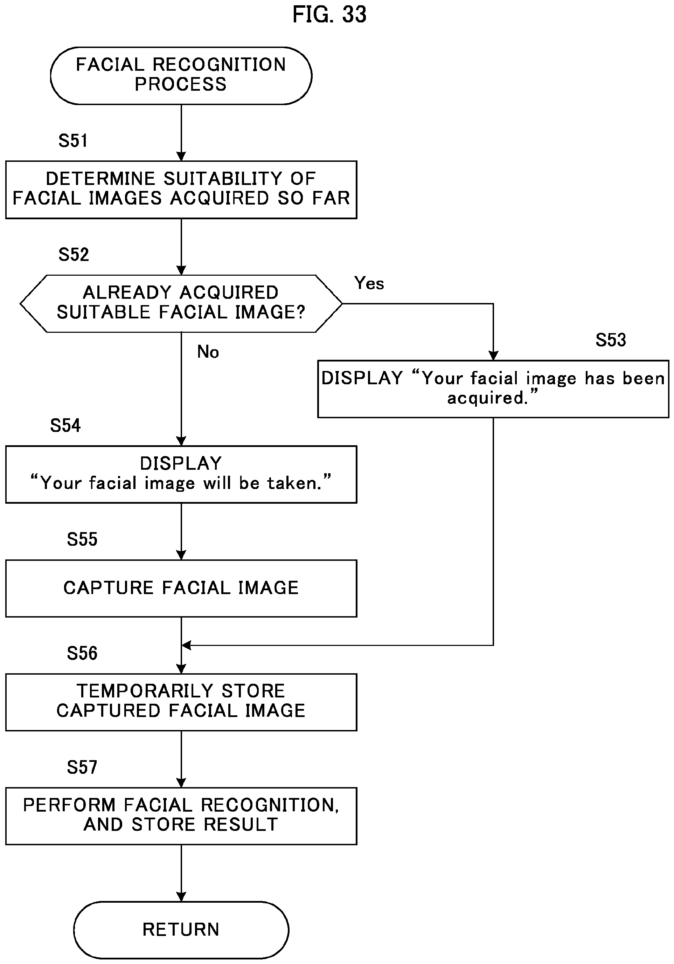

FIG. 33 is a flowchart of the facial recognition process according to the second example embodiment. First, the information processing device 100 determines whether the facial images acquired so far are suitable (step S51). In detail, the information processing device 100 analyzes the facial images of the entrant P who is captured after the facial recognition cameras 118 are turned on in step S2 and determines whether or not the facial images correspond to the aforementioned suitable facial image. When it is determined that the suitable facial image is not acquired (step S52: No), the information processing device 100 performs the facial recognition process in the same manner as in the first example embodiment. That is, the information processing device 100 displays a message such as "Your facial image will be taken." on the touch panel 117 (step S54) and takes facial images (step S55). Subsequently, the information processing device 100 temporarily stores the captured facial image in the memory 113 (step S56), performs the facial recognition using the captured facial image and the facial image included in the passport information, and stores a result of the facial recognition in the memory 113 (step S57).

On the other hand, when it is determined that the suitable facial image is acquired (step S52: Yes), the information processing device 100 displays a message such as "The facial image has been acquired." on the touch panel 117 (step S53), and advances to step S56 without taking further facial images. The information processing device 100 temporarily stores the suitable facial image acquired prior to the start of the facial recognition process in the memory 113 (step S56), and performs the facial recognition using the suitable facial image and the facial image included in the passport information, and stores a result of the facial recognition in the memory 113 (step S57). Accordingly, the facial recognition process ends and the process advances to the fingerprint collection process. Note that since processes after the fingerprint collection process are the same as those of the first example embodiment, explanations thereof will be omitted.

In the processes in FIG. 32 and FIG. 33, even in a case where the suitable facial image is acquired, the recognition process using the suitable facial image is not performed until the passport process is completed. Alternatively, in a case where the suitable facial image can be acquired, the facial recognition process using the suitable facial image may be performed in parallel with the passport process. In this case, a message such as "Your facial recognition process has been completed." may be displayed on the touch panel 117, instead of "Your facial image has been acquired". In addition, the display of messages such as "The facial image has been acquired." and "The facial recognition process has been completed." may be omitted and the fingerprint collection process advances as soon as the passport process is completed.

As described above, in the information acquisition process of the second example embodiment, the facial image of the entrant P is taken by the facial recognition cameras 118 until the entrant P ends the passport process. After that, in a case where the suitable facial image with a quality usable for facial recognition can be acquired during that time, a facial image is not taken in the facial recognition process, and the facial recognition process is performed using the suitable facial image. Accordingly, it is possible to reduce the time required for the facial recognition process. Note that the second example embodiment may be implemented in combination with the first example embodiment.

### [Modifications]

### (Modification 1)

In the second example embodiment, in step S51, the information processing device 100 determines the suitable facial image based on whether the orientation of the face in the facial image is suitable or whether the resolution of the image is sufficient. Instead, the information processing device 100 actually performs facial recognition process using facial images acquired until the end of the passport process and the facial image included in the passport information acquired by the passport process, and when the acquired verification score (matching score) is equal to or more than a predetermined value, the facial image may be determined to be the suitable facial image.

### (Modification 2)

In the second example embodiment, the facial images of the entrant P are captured by the facial recognition cameras 118 even while the passport process is being performed, but the facial image is captured without the entrant P being aware of this operation. Therefore, it is preferable that the information processing device 100 informs the entrant P that the facial images are being taken when the taking of the facial images of the entrant P is started in step S2 in FIG. 32. For instance, the information processing device 100 may display a message such as "Taking facial images" on the touch panel 117 or a mark representing that the facial images are being taken by the camera. By such a message, it is possible to inform the entrant P that the taking of the facial images is in progress. When the entrant P knows that the facial images are being taken, it is considered to cooperate with the taking of the facial images by directing the face to the touch panel 117 and so on, so that a possibility that the suitable facial image can be acquired in parallel with the passport process becomes high, and the efficiency improvement of the information acquisition processing can be expected. Also, in a case of informing the entrant P that the taking of the facial images is in progress, the entrant P may be notified to that effect at a timing when the suitable facial image is acquired. For instance, the information processing device 100 may display a message such as "facial image OK" or a mark on the touch panel 117 at a timing when the suitable facial image can be acquired.

### <Third Example Embodiment>

Next, a third example embodiment of this disclosure will be described.

### [Basic Concept]

A configuration of the information processing device 100 according to the third example embodiment is basically the same as that of the first example embodiment, and includes the external configuration illustrated in FIG. 2 and the internal configuration illustrated in FIG. 4. However, the information processing device 100 according to the second example embodiment differs from the first example embodiment in the fingerprint acquisition process performed in step S30 of the information acquisition process illustrated in FIG. 6.

Fingerprints collected by the information processing device 100 are matched with a so-called watchlist. In the passport control, in a case where the fingerprints of the entrant P are on the watchlist, the entry of the entrant P is denied. For this reason, the entrant P, who is concerned about being on the watch list, may think of providing fingerprints of another person (hereinafter referred to as a "collaborator") who is together with the entrant P, instead of fingerprints of the entrant P in the fingerprint collection process. In such this case, a plurality of persons, who includes the entrant (hereinafter referred to as an "impostor") who commits an unauthorized operation and the collaborator, may perform the fingerprint collection process in front of the information processing device 100. Therefore, in the third example embodiment, the information processing device 100 detects that there are the plurality of persons in front of the information processing device 100 as an abnormality using thermographic images output by the thermal sensor 115 during the fingerprint collection process, and issues an alert to report to the concierge and interrupts the fingerprint collection process in a case where there are the plurality of persons. Accordingly, it is possible to prevent a fraudulent activity such as that the impostor who carries out the unauthorized operation provides the fingerprints of the collaborator, instead of the fingerprints of that person.

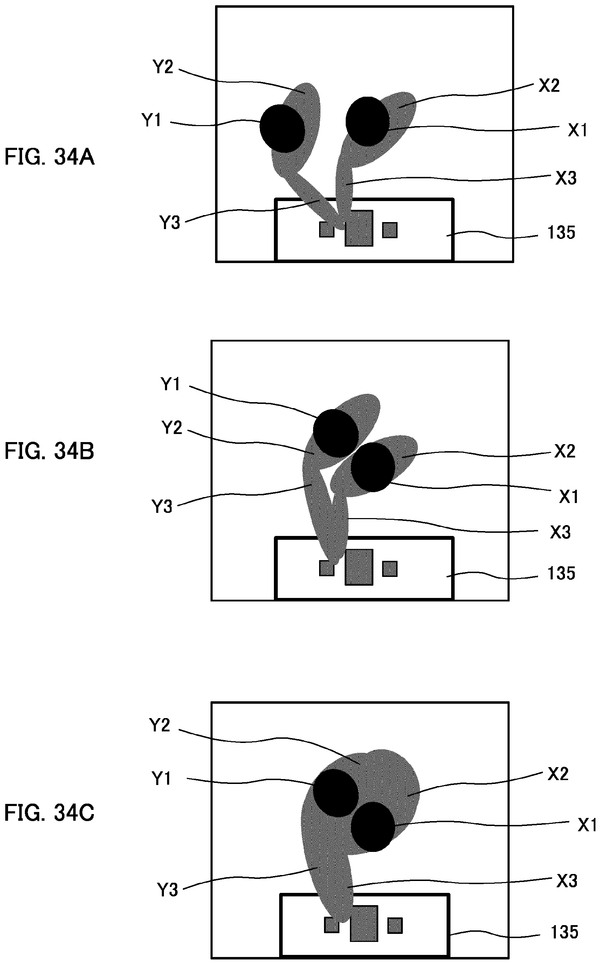

FIG. 34A illustrates an example of a thermographic image in a state in which two persons, an impostor X and a collaborator Y, are operating the information processing device 100. The impostor X stands almost in front of the information processing device 100, and a head X1, a body X2, and an arm X3 of the impostor X are detected. The arm X3 of the impostor X extends to the table 135 of the information processing device 100. In FIG. 16, for convenience of illustration, temperature of a heat source is indicated in gray scale, a high temperature region is indicated in a color close to black, a low temperature region is indicated in a color close to white. In general, with respect to region which are not covered by clothing or the head, higher temperature is detected in a region other than a region which is covered by the clothing, the body, or the arm, so the head X1 is represented by a darker color than the body X2 or the arm X3. By acquiring and analyzing the temperature of each region, it is possible to discriminate each of regions such as a region of the head, a region of the body, or another region from the thermographic image. Meanwhile, the collaborator Y is standing at a position slightly laterally deviated from a front surface of the information processing device 100, and a head Y1, a body Y2, and an arm Y3 of the collaborator Y are detected. The arm Y3 of the collaborator Y also extends to the table 135 of the information processing device 100.

FIG. 34B illustrates another example of the thermographic image in a state where two persons: the impostor X and the collaborator Y, are operating the information processing device 100. Similar to the example embodiment in FIG. 16A, the impostor X stands almost in front of the information processing device 100, and the head X1, the body X2, and the arm X3 of the impostor X are detected. The arm X3 of the impostor X extends to the table 135 of the information processing device 100. On the other hand, the collaborator Y is hidden behind the impostor X, but the head Y1, the body Y2 and the arm Y3 of the collaborator Y have been detected by thermographic image. The arm Y3 of the collaborator Y extends to the table 135 of the information processing device 100.

FIG. 34C illustrates another example of the thermographic image in a state where two persons: the impostor X and the collaborator Y are operating the information processing device 100. In this example, similar to the example in FIG. 16B, the collaborator Y is behind the impostor X, but since bodies of the two persons are close to each other, regions in the thermographic image are integrated and detected as one large region. In detail, the body X2 of the impostor X and the body Y2 of the collaborator Y are integrated to form a large region, and the body X2 of the impostor X and the body Y2 of the collaborator Y are integrated to form one thick arm. However, since the head has a higher temperature than the body, the head is detected as a region of different color from the body. Moreover, even in a case where the collaborator Y is hidden behind the imposter X, each head can often be detected as a distinct region. Therefore, even when regions of a body and an arm detected in front of the information processing device 100 are integrated, it can be determined that there are a plurality of persons based on the number of detected heads. In addition to the determination based on the number of heads, a size and an area of a typical adult body are determined in advance by experiments or the like, and when a region excessively larger than the size of the typical body is detected, it may be determined that there is a high possibility of the plurality of persons.

Incidentally, in practice, in a case where two persons are included in the thermographic image, it is difficult to distinguish who is the impostor and who is the collaborator; however, the information processing device 100 does not need to distinguish who is the impostor and who is the collaborator, and issues an alert simply when the plurality of persons are detected from the thermographic image.

In this manner, it is possible to detect that there are the plurality of persons in front of the information processing device 100, by using the thermographic image which is output by the thermal sensor 115. Therefore, during the information acquisition process, especially in a case where the plurality of persons are detected in front of the information processing device 100 during the fingerprint collection process, the information processing device 100 determines that the entrant is likely to commit an unauthorized operation, and outputs the alert to the concierge. Since the alert output by the information processing device 100 is displayed on the tablet 300 possessed by the concierge, it is possible for the concierge to move to a place of the information processing device 100 that outputs the alert, and to check whether the unauthorized operation has been performed.

Note that in the third example embodiment, the facial recognition cameras 118, the passport reader 119, and the fingerprint scanners 120 are examples of an information acquisition means, the thermal sensor 115 or the surveillance camera 116 is an example of an abnormality detection means, and the processor 112 is an example of a control means.

### [Process Flow]

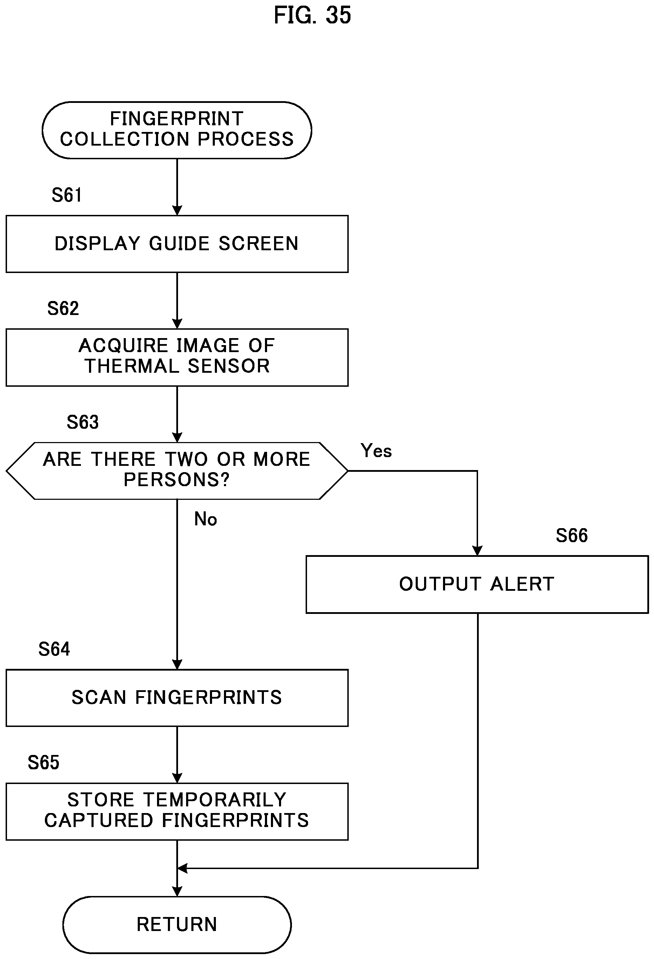

FIG. 35 is a flowchart of the fingerprint acquisition process according to the third example embodiment. This fingerprint acquisition process is executed as step S30 of the information acquisition process illustrated in FIG. 6. First, the information processing device 100 displays a guide screen for taking fingerprints on the touch panel 117 (step S61). For instance, as illustrated in FIG. 14A, the information processing device 100 displays, on the touch panel 117, a guide image indicating a placement method of fingers with respect to the fingerprint scanners 120. Next, the information processing device 100 acquires a thermographic image from the thermal sensor 115 (step S62). Next, the information processing device 100 determines whether or not the plurality of persons have been detected in front of the information processing device 100 based on the thermographic image (step S63).

In a case where the plurality of persons are not detected (step S63: No), that is, in a case where one person is in front of the information processing device 100, the information processing device 100 scans the fingerprints of a right index finger and a left index finger of the entrant P by the fingerprint scanners 120R and 120L (step S64), and temporarily stores fingerprint images in the memory 113 (step S65). Next, the process returns to the main routine in FIG. 6.

On the other hand, when the plurality of persons are detected (step S63: Yes), the information processing device 100 outputs the alert to the tablet 300 of the concierge (step S66). After confirming the alert, the concierge goes to the information processing device 100 of interest, and takes necessary measures. For instance, in a case where the concierge assists on that site and correctly collects fingerprints of the impostor, the process advances to the main routine in FIG. 6.

As described above, according to the third example embodiment, since it is possible to detect the presence of the plurality of persons in front of the information processing device 100 by using the thermal sensor 115, it is possible to detect an unauthorized activity such as that the entrant P scans fingerprints of another person. Note that the third example embodiment can be implemented with one of or in combination with both the first example embodiment and the second example embodiment.

### [Modifications]

### (Modification 1)

In the above-described example embodiment, the information processing device 100 detects a plurality of persons based on the thermographic image which is output by the thermal sensor 115; however, instead, a plurality of persons may be detected based on the captured image of the surveillance camera 116. In addition, the plurality of persons may be detected using both the thermographic image output by the thermal sensor 115 and the captured image of the surveillance camera 116. Moreover, the information processing device 100 further activates the facial recognition cameras 118, and may use the captured image of the facial recognition cameras 118 together.

### (Modification 2)

Even in a case where it is detected that there are the plurality of persons in front of the information processing device 100 based on the thermographic image, it may not be that fraud has been committed. For instance, a state may be considered in which the plurality of persons are a parent and a child, and the parent assists the child to operate the information processing device 100. Also, a state may be in which the concierge is assisting the operation for the entrant P who does not well understand an operation method of the information processing device 100. Therefore, in a case where the parent assists the operation of the child or in a case where the concierge is assisting the operation, the information processing device 100 may not output the alert. Note that the information processing device 100 can determine whether or not the detected state concerning the plurality of persons corresponds to the above-described operation assistance by an image analysis of the captured image of the surveillance camera 116. The surveillance camera 116 may be always turned on during the operation of the information processing device 100 by the entrant P, and may be activated when the information processing device 100 detects the plurality of persons. For instance, in a case where two persons in the captured image of the surveillance camera 116 correspond to a combination of the adult and the child, the information processing device 100 can determine that the state corresponds to the operation assistance of the parent for the child. Note that the determination of whether or not the person in the captured image is a child may be performed by estimating an age from the facial image captured by the facial recognition cameras 118, may be performed based on the image of the surveillance camera 116 or based on outputs of the thermal cameras 115 (a size or a shape of a heat source), or may be performed based on the passport information. In addition, when one of two persons in the captured image of the surveillance camera 116 is the concierge wearing a known uniform, the information processing device 100 can determine that this state corresponds to the operation assistance by the concierge. In a case where the information processing device 100 dedicated to the plurality of persons (for instance, dedicated to families, dedicated to disabled persons, or the like) is provided on a premise that the information processing device is operated by the plurality of persons, even in a case where the plurality of persons are detected, the alert may not be output.

As a specific process, in a flowchart illustrated in FIG. 35, when the plurality of persons are detected in step S63 (step S63: Yes), the information processing device 100 determines whether or not the detected state representing the plurality of persons corresponds to the aforementioned operation assistance. In a case where the state representing the plurality of persons corresponds to the operation assistance, the process advances to step S64, and the information processing device 100 scans the fingerprints. On the other hand, when the state representing the plurality of persons does not correspond to the operation assistance, the process advances to step S66, and the information processing device 100 outputs the alert.

In a case where the plurality of persons are detected based on the thermographic image, even if the alert is not output as corresponding to the operation assistance thereafter, the information processing device 100 may store the thermographic image at that time, images captured by the surveillance camera 116, and the like in the memory 113, and transmit those images to the management server 200 together with the personal identification information of the entrant P. In this instance, the management server 200 transmits the thermographic image or the captured image of the surveillance camera 116 to the PC 5 in the passport control booth at a time of an inspection with respect to the entrant P. Therefore, in a case where the entrant P undergoes the inspection at the passport control booth, the immigration officer can see the fact that the plurality of persons have been detected, the thermographic image at that time, the images of the surveillance camera 116, and the like.

### <Fourth Example Embodiment>

Next, a fourth example embodiment of the present disclosure will be described.

### [Basic Concept]

A configuration of the information processing device 100 according to the fourth example embodiment is basically the same as that of the first example embodiment, and includes the external configuration illustrated in FIG. 2 and the internal configuration illustrated in FIG. 4. In the fourth example embodiment, the information processing device 100 detects that the entrant P has a fever, by using the thermal sensor 115.

In the airport, the fever of the entrant sometimes is inspected from a viewpoint of measures for viruses, or the like. In general, a thermal sensor or the like is arranged at a place where the entrant P passes, and a body temperature of a feverish person is detected based on the thermographic image, and when the detected body temperature is equal to or higher than a predetermined threshold value, it is determined that the entrant P has the fever. In the fourth example embodiment, while the entrant P is standing in front of the information processing device 100 to perform the information acquisition process, the information processing device 100 detects a surface temperature of the entrant P based on the thermographic images output by the thermal sensor 115. Subsequently, when the detected surface temperature is higher than the predetermined threshold value, the information processing device 100 determines that the entrant P has the fever and outputs the alert to the tablet 300 of the concierge. Also, the information processing device 100 may display a message such as "Fever is suspected" on the touch panel 117. Accordingly, it is possible for the concierge to take the entrant P suspected of having the fever to a predetermined inspection area.

However, a surface temperature detected by the thermal sensor 115 is a surface temperature of the body of the entrant P, and a surface temperature of an exposed portion such as the head and a surface temperature of a portion wearing clothing are likely to be affected by an outside air or a temperature of its environment. Therefore, in the fourth example embodiment, the information processing device 100 corrects the threshold value used for determining that the entrant P has the fever, based on external factors regarding the entrant P.

Specific correction methods are as follows.

### (1) Correction based on areas through which the entrant P passes

In a case where a route from when the entrant P exits the airplane to a passport control area is entirely an indoor, the route along which the entrant P moves is controlled in temperature by air conditioning, and thus the information processing device 100 does not correct the threshold value. On the other hand, in a case where the route leading to the passport control area passes through outdoors, the surface temperature of the entrant P is affected by an outside air temperature, so that the information processing device 100 corrects the threshold value. In detail, at an airport in a cold region where the outside air temperature falls below a freezing point, since the surface temperature of the entrant P decreases due to a low outside air temperature, the information processing device 100 lowers the threshold value. On the other hand, at an airport in which the outside air temperature is higher than the body temperature such as a desert area, since the surface temperature of the entrant P rises due to a high outside temperature, the information processing device 100 increases the threshold value. Incidentally, the route including the outdoors is, for instance, a route from an airplane to an airport terminal by bus.

Moreover, a correction amount of the threshold value may be a constant amount or may be changed in accordance with an outside air temperature. In a case where the correction amount is the constant amount, for instance, the information processing device 100 lowers the threshold value by a predetermined amount (for instance, 0.5°C) when the route to the passport control area includes the outdoors. In addition, in a case where the correction amount is changed according to the outside air temperature, the lower or higher the outside air temperature is, the more the information processing device 100 may increase the correction amount, and the larger a difference between the outside air temperature and the temperature in the airport terminal is, the more the information processing device 100 may increase the correction amount.

Note that the route, which is from when the entrant P deplanes from when the entrant P arrives at the passport control area, is determined in advance for each airplane arriving, and the route can be determined by a flight name of the airplane on which the entrant P boarded. In detail, the flight name of the airplane which the entrant P planed is managed in association with an entrant identification information (a name, a membership ID, and the like), and the flight name can be specified using the entrant identification information specified by the information processing device 100. Therefore, in a case where the correction amount of the threshold value is set to be the constant amount, the information processing device 100 may perform a correction for the correction amount determined in advance based on the flight name.

### (2) Correction for a case where the entrant P has drunk alcohol

In a case where the entrant P has drunk alcohol, the surface temperature of the entrant P detected by the thermal sensor 115 tends to increase. Therefore, in a case where an alcohol sensor is provided in the information processing device 100, and the entrant P has drunk alcohol, the information processing device 100 increases the threshold value by a predetermined amount.

### (3) Correction considering a temperature of a region where the entrant P wears clothes

A temperature detected by the thermal sensor 115 is approximately equal to a body temperature in a portion (hereinafter, referred to as an exposed portion") where the head, each hand, or the like of the entrant P is exposed, but a portion covered with clothes or the like (hereinafter, referred to as an "unexposed portion") is likely to be affected by the outside temperature. For instance, in a case of being exposed to the outside air at the airport in the cold region or the like, even if the temperature of the exposed portion of the entrant P detected by the thermal sensor 115 maintains a value close to the body temperature, the temperature of the unexposed portion may considerably decrease due to the influence of the outside air temperature.

Therefore, the information processing device 100 corrects the threshold value based on a temperature difference between the exposed portion and the unexposed portion of the entrant P detected by the thermal sensor 115. In detail, in a case where the temperature difference between the exposed portion and the unexposed portion is less than the predetermined value, the information processing device 100 does not perform the correction of the threshold value. On the other hand, when the temperature difference between the exposed portion and the unexposed portion is equal to or more than the predetermined value, the information processing device 100 corrects the threshold value according to the temperature of the unexposed portion. For instance, in a case where the temperature difference between the exposed portion and the unexposed portion that is equal to or more than the predetermined value and the temperature of the unexposed portion is lower than the temperature of the exposed portion, the information processing device 100 decreases the threshold value. On the other hand, in a case where the temperature difference between the exposed portion and the unexposed portion is equal to or more than the predetermined value, and the temperature of the unexposed portion is higher than the temperature of the exposed portion, the information processing device 100 increases the threshold value.

As described above, instead of correcting the threshold value based on the temperature difference between the exposed portion and the unexposed portion, the threshold value may be corrected based on the temperature of the unexposed portion. That is, the information processing device 100 may increase the threshold value when the temperature of the unexposed portion is higher than a first predetermined temperature, and may decrease the threshold value when the temperature of the unexposed portion is lower than a second predetermined temperature.

Noted that in the fourth example embodiment, the thermal sensor 115 and the processor 112 correspond to an example of a body temperature estimation means, and the processor 112 corresponds to an example of a fever estimation means and a threshold correction means.

### [Process Flow]

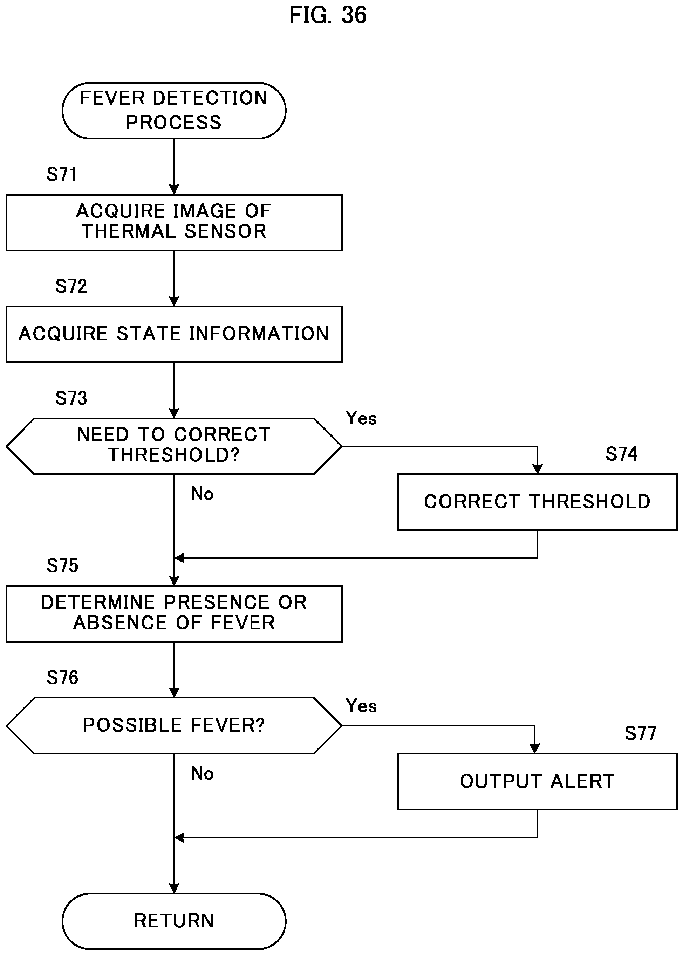

FIG. 36 is a flowchart of a fever detection process according to the fourth example embodiment. This fever detection process is realized by the processor 112 illustrated in FIG. 4 which executes a program prepared in advance.

First, when the entrant P stands in front of the information processing device 100, the information processing device 100 acquires thermographic images from the thermal sensor 115 (step S71). Next, the information processing device 100 acquires state information indicating a state of the entrant P (step S72). The state information corresponds to information used to determine whether or not the correction of the threshold value is required. For instance, in an example of (1) described above, the state information may indicate whether or not the entrant P passed the outdoors, the surface temperature of the entrant P detected from the thermographic image, and the like. In the example of (2) described above, the state information may indicate whether or not alcohol has been detected from the entrant P. Moreover, in an example of (3) described above, the state information may indicate respective temperatures of the exposed portion and the unexposed portion of the entrant P detected from the thermographic image.

Next, the information processing device 100 determines, based on the state information, whether or not the threshold value for determining a presence or an absence of a fever is corrected (step S73). When it is determined that the threshold value is needed to be corrected (step S73: Yes), the information processing device 100 corrects the threshold value by at least one method among methods described in (1) to (3) above (step S74). Incidentally, it may be used in combination of two or more methods among the above described (1) to (3). On the other hand, when it is determined that the threshold value is not necessary to be corrected (step S73: No), the information processing device 100 does not correct the threshold value.

Next, the information processing device 100 compares the detected temperature such as the body temperature of the entrant P, specifically the head or the like, which is acquired from the thermographic image, with the threshold value, and determines whether or not the entrant P has a fever (step S75). When the body temperature of the entrant P is higher than the threshold value, the information processing device 100 determines that the entrant P may have the fever, and when the body temperature of the entrant P is lower than the threshold value, the information processing device 100 determines that the entrant P may not have the fever. When it is determined that the entrant P may have the fever (step S76: Yes), the information processing device 100 outputs an alert to the tablet 300 of the concierge (step S77), and terminates the fever detection process. Accordingly, the concierge comes to a place of the information processing device 100 which outputs the alert, and takes the entrant P suspected of the fever to a predetermined area. In step S77, the information processing device 100 may display "possibility of the fever" or the like on the touch panel 117. On the other hand, when it is determined that there is no possibility of the fever (step S76: No), the fever detection process is terminated.

As described above, according to the fourth example embodiment, when the body temperature of the entrant P is measured by the thermal sensor 115 to inspect the possibility of the fever, since the threshold value for determining the presence or the absence of the fever is corrected in consideration with whether the entrant P has passed through the outdoors, whether the entrant P has drunk alcohol, or the detected temperature at the unexposed portion of the entrant P is corrected, it is possible to reduce an influence of an external factor and improve a detection accuracy of a person with a fever. Note that the fourth example embodiment can be implemented by one or a combination of some of the first example embodiment to the third example embodiment.

### [Modifications]

### (Modification 1)

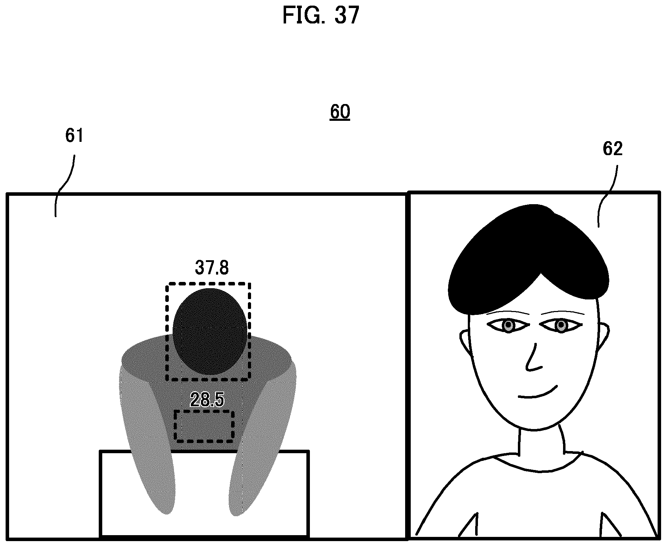

In the above-described processing flow, in a case where the entrant P is suspected of having the fever, the information processing device 100 sends the alert to the tablet 300 of the concierge. At this time, the information processing device 100 may simultaneously transmit thermographic images output by the thermal sensor 115 to the tablet 300 so that the concierge can view those images. FIG. 37 illustrates examples of images which are sent to the tablet 300 when the person having the fever is found. In this example, the information processing device 100 transmits an image 60 including a thermographic image 61 output by the thermal sensor 115 and a facial image 62 of the entrant P who is determined to be likely to have the fever, to the tablet 300, and the tablet 300 displays the received image 60. The thermographic image 61 represents areas used by the information processing device 100 to determine the presence or the absence of the fever and respective detection temperature on the areas. In an example in FIG. 37, the detection temperature of a head of the entrant P is displayed as "37.8°C" and the detected temperature of a chest of the entrant P is displayed as "28.5°C". Moreover, the display of the facial image 62 makes it easier for the concierge to find a target entrant P. Furthermore, the information processing device 100 may send the image 60 to the management server 200 and to the PC 5 of the passport control booth as necessary, so that the immigration officer can view the images.

### (Modification 2)

In a case where the entrant P having the possibility of the fever is found, the information processing device 100 may be temporarily stopped. In this case, the information processing device 100 itself may be automatically stopped due to a program inside the information processing device 100 when it is determined that there is a possibility of a fever. Instead, when it is determined that there is the possibility of the fever, the information processing device 100 transmits a determination result to the management server 2, and the information processing device 100 may be stopped under a control of the management server 200. A message such as "use prohibited" may be displayed on the touch panel 117 of the information processing device 100 being stopped, and the display on the touch panel 117 may be turned off. In addition, the concierge who has viewed the alert on the tablet 300 may temporarily stop the information processing device 100 of a subject. The information processing device 100 being stopped may be restored after a necessary operation such as disinfection is performed.

Moreover, in a case of guiding to the passport control area by group for each airplane on which the entrant P boarded, all entrants on the same flight as the entrant P, who are determined to have the possibility of the fever, may be separated from entrants on other flights by, for instance, guiding them to a route different from other flight routes. In addition, the information processing device 100, which detects the entrant P who may have the fever, may report that effect to the management server 200, and the management server 200 may transmit a list of all entrants on board the same flight as that of the entrant P determined to have the fever and facial images to the tablet 300 of the concierge. Accordingly, it is possible for the concierge to isolate passengers of that flight while looking at the facial images. Instead of targeting all entrants deplaning from the same flight as that of the entrant P who is likely to have the fever as described above, persons who were seated in seats near the entrant P being likely to have the fever (persons in seats around that entrant P or persons in front of that entrant P) may be specified as persons to be isolated, and the facial images may be transmitted to the tablet 300 of the concierge.

### <Fifth Example Embodiment>

Next, a fifth example embodiment of the present disclosure will be described.

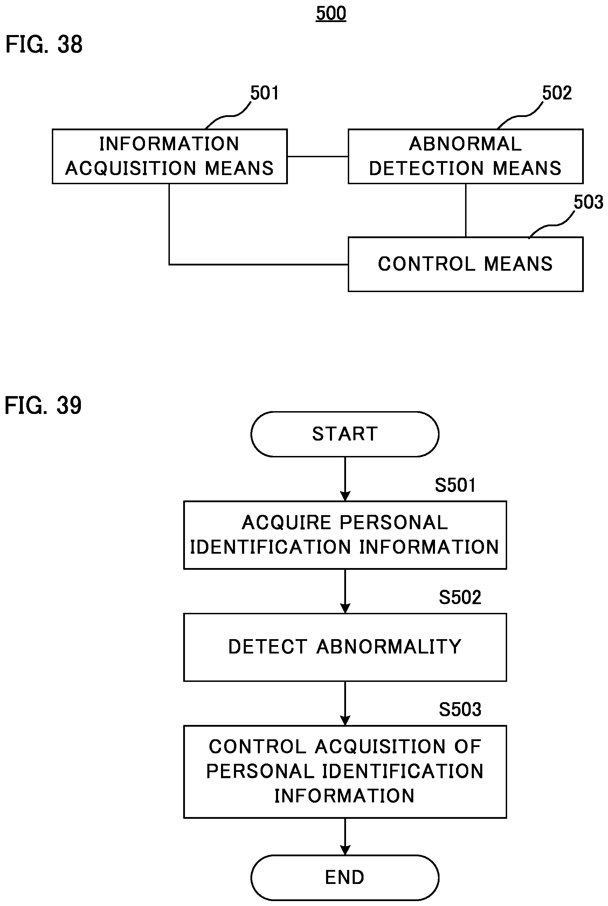

FIG. 38 is a block diagram illustrating a configuration of an information processing device according to the fifth example embodiment. An information processing device 500 includes an information acquisition means 501, an abnormality detection means 502, and a control means 503. The information acquisition means 501 acquires personal identification information of a subject. The abnormality detection means 502 detects an abnormality related to the subject by using a sensor. The control means 503 controls acquiring of the personal identification information based on the abnormality.

FIG. 39 is a flowchart of an information processing according to the fifth example embodiment. This information processing is realized by the processor 112 illustrated in FIG. 4 which executes a program prepared in advance. First, the information acquisition means 501 acquires personal identification information of a subject (step S501). Next, the abnormality detection means 502 detects an abnormality related to the subject by using the sensor (step S502). The control means 503 controls acquiring of the personal identification based on the abnormality (step S503). After that, the information processing is terminated.

According to the information processing device 500, when an abnormality related to the target is detected while the personal identification information is being acquired from the target, it is possible to control to acquire the personal identification information based on the abnormality.

Some or all of the above example embodiments may also be described as in the following supplementary notes, but are not limited to the following.

### (Supplementary note 1)

1. An information processing device comprising:
   an information acquisition means configured to acquire personal identification information of a subject;
   an abnormality detection means configured to detect an abnormality concerning the subject by using sensors; and
   a control means configured to control the acquiring of the personal identification information based on the abnormality.

### (Supplementary note 2)

2. The information processing device according to supplementary note 1, wherein
the sensors include a thermal sensor,
the abnormality detection means detects, the abnormality, a plurality of persons in front of the information processing device, and
the control means sends an alert to a terminal device when the abnormality is detected.

### (Supplementary note 3)

3. The information processing device according to supplementary note 2, wherein the abnormality detection means detects that the plurality of persons exist, based on the number of heads of subjects in a thermographic image output by the thermal sensor.

### (Supplementary note 4)

4. The information processing device according to supplementary note 2 or 3, wherein when it is detected that the plurality of persons exist in front of the information processing device, the control means determines whether or not a state of the plurality of persons corresponds to an assistance state in which one of the plurality of persons assists operations of another person, and does not send the alert when the state of the plurality of persons corresponds to the assistant state.

### (Supplementary note 5)

5. The information processing device according to supplementary note 2, wherein
the sensors include a thermal sensor, and
the information processing device includes
   a body temperature estimation means configured to estimate a body temperature of the subject based on thermographic images output from the thermal sensor;
   a fever determination means configured to determine that the subject is likely to have a fever in a case where the body temperature is higher than a threshold value determined in advance; and
   a threshold correction means configured to correct the threshold value based one at least one of a route moved by the subject, whether the subject has drunk alcohol, and a detected temperature of an unexposed portion of the subject in the thermographic images.

### (Supplementary note 6)

6. The information processing device according to supplementary note 5, wherein
the fever determination means sends images of the subject to the terminal device when determining that the subject is likely to have the fever, and
the images of the subject include the thermographic images of the subject which are generated by the thermal sensor and a facial image of the subject.

### (Supplementary note 7)

7. The information processing device according to supplementary note 1, wherein
the sensors include a camera,
the personal identification information includes passport information of the subject and facial images of the subject,
the information acquisition means performs a facial image acquisition process for acquiring the facial images of the subject after performing a passport information acquisition process for acquiring the passport information of the subject, and
the information acquisition means omits the facial image acquisition process after the passport information acquisition process, when a facial image suitable for a predetermined quality is acquired by the camera either during the passport information acquisition process or before the passport information acquisition process.

### (Supplementary note 8)

8. A system comprising the information processing device according to supplementary note 2 and the terminal device,
wherein the terminal device displays captured images of the subject operating the information processing device, and information indicating a process being executed among a plurality of processes for acquiring the personal identification information.

### (Supplementary note 9)

9. A method comprising:
acquiring personal identification information of a subject;
detecting an abnormality concerning the subject by using sensors; and
controlling the acquiring of the personal identification information based on the abnormality.

### (Supplementary note 10)

10. A recording medium storing a program, the program causing a computer to perform a process comprising:
acquiring personal identification information of a subject;
detecting an abnormality concerning the subject by using sensors; and
controlling the acquiring of the personal identification information based on the abnormality.

While the disclosure has been described with reference to the example embodiments and examples, the disclosure is not limited to the above example embodiments and examples. It will be understood by those of ordinary skill in the art that various changes in form and details may be made therein without departing from the spirit and scope of the present disclosure as defined by the claims.

### DESCRIPTION OF SYMBOLS

- 1: Passport control system
- 5: PC
- 100: Information processing device
- 115: Thermal sensor
- 116: Surveillance camera
- 117: Touch panel
- 118: Facial recognition cameras
- 119: Passport reader
- 120: Fingerprint scanners
- 121: Cameras for hands
- 122: Height adjustment mechanism
- 200: Management server
- 212: Processor
- 300: Tablet
- 312: Processor
- 314: Touch panel
- P: Entrant

## Claims

1. An information processing device comprising:
an information acquisition means configured to acquire personal identification information of a subject;
an abnormality detection means configured to detect an abnormality concerning the subject by using sensors; and
a control means configured to control the acquiring of the personal identification information based on the abnormality.

2. The information processing device according to claim 1, wherein
the sensors include a thermal sensor,
the abnormality detection means detects, the abnormality, a plurality of persons in front of the information processing device, and
the control means sends an alert to a terminal device when the abnormality is detected.

3. The information processing device according to claim 2, wherein the abnormality detection means detects that the plurality of persons exist, based on the number of heads of subjects in a thermographic image output by the thermal sensor.

4. The information processing device according to claim 2 or 3, wherein when it is detected that the plurality of persons exist in front of the information processing device, the control means determines whether or not a state of the plurality of persons corresponds to an assistance state in which one of the plurality of persons assists operations of another person, and does not send the alert when the state of the plurality of persons corresponds to the assistant state.

5. The information processing device according to claim 2, wherein
the sensors include a thermal sensor, and
the information processing device includes
a body temperature estimation means configured to estimate a body temperature of the subject based on thermographic images output from the thermal sensor;
a fever determination means configured to determine that the subject is likely to have a fever in a case where the body temperature is higher than a threshold value determined in advance; and
a threshold correction means configured to correct the threshold value based one at least one of a route moved by the subject, whether the subject has drunk alcohol, and a detected temperature of an unexposed portion of the subject in the thermographic images.

6. The information processing device according to claim 5, wherein
the fever determination means sends images of the subject to the terminal device when determining that the subject is likely to have the fever, and
the images of the subject include the thermographic images of the subject which are generated by the thermal sensor and a facial image of the subject.

7. The information processing device according to claim 1, wherein
the sensors include a camera,
the personal identification information includes passport information of the subject and facial images of the subject,
the information acquisition means performs a facial image acquisition process for acquiring the facial images of the subject after performing a passport information acquisition process for acquiring the passport information of the subject, and
the information acquisition means omits the facial image acquisition process after the passport information acquisition process, when a facial image suitable for a predetermined quality is acquired by the camera either during the passport information acquisition process or before the passport information acquisition process.

8. A system comprising the information processing device according to claim 2 and the terminal device,
wherein the terminal device displays captured images of the subject operating the information processing device, and information indicating a process being executed among a plurality of processes for acquiring the personal identification information.

9. A method comprising:
acquiring personal identification information of a subject;
detecting an abnormality concerning the subject by using sensors; and
controlling the acquiring of the personal identification information based on the abnormality.

10. A recording medium storing a program, the program causing a computer to perform a process comprising:
acquiring personal identification information of a subject;
detecting an abnormality concerning the subject by using sensors; and
controlling the acquiring of the personal identification information based on the abnormality.
